# EUROPEAN PATENT APPLICATION

(11) **EP 4 358 491 A1**
(43) Date of publication of application: **24.04.2024**
(21) Application number: 23837533.1
(22) Date of filing: 10.08.2023
(51) Int. Cl.: H04L 51/42

(54) **MAIL MANAGEMENT METHOD AND ELECTRONIC DEVICE**

(30) Priority: 16.08.2022 CN 202210985960
(71) Applicant: Huawei Technologies Co., Ltd., Shenzhen, Guangdong 518129 (CN)
(72) Inventor: GUO, Zhao, Shenzhen Guangdong 518129 (CN)
(74) Representative: Maiwald GmbH
(86) International application number: PCT/CN2023/112245
(87) International publication number: WO 2024/037416

(57) **Abstract**

This application provides a mail management method and an electronic device, and relates to the field of mail processing technologies. The method includes: displaying a first interface of a mailbox application; receiving a classification configuration operation, and obtaining a first classification rule corresponding to a first classification folder; and displaying a third interface after receiving the classification configuration operation. A plurality of mailbox accounts are added to the mailbox application, the third interface includes a mail list corresponding to the first classification folder, and the mail list corresponding to the first classification folder is obtained after mails of the plurality of mailbox accounts are classified according to the first classification rule. The technical solution provided in this application can help a user reduce time costs of mail management.

## Description

This application claims priority to Chinese Patent Application No. 202210985960.2, filed with the China National Intellectual Property Administration on August 16, 2022 and entitled "MAIL MANAGEMENT METHOD AND ELECTRONIC DEVICE", which is incorporated herein by reference in its entirety.

### TECHNICAL FIELD

This application relates to the field of mail processing technologies, and in particular, to a mail management method and an electronic device.

### BACKGROUND

Electronic mail (email), short for email, has many advantages such as easy to use, fast delivery, low costs, and high security, and has become an indispensable communication tool in people's work and life.

Many users have a plurality of mailbox accounts. To facilitate user use, some applications (applications, apps) provide a multi-mailbox account management function. This function allows users to add a plurality of mailbox accounts to send, receive, and manage mails under the plurality of mailbox accounts.

However, as a quantity of mails increases, time costs of managing the mails by the user also increases. Especially, as a quantity of managed mailbox accounts increases, the quantity of mails increases exponentially, and the time costs of managing the mails by the user also increases exponentially. Therefore, how to help the user improve mail management efficiency is a problem that needs to be resolved.

### SUMMARY

In view of this, this application provides a mail management method and an electronic device, to help a user reduce time costs of mail management.

To achieve the foregoing objective, according to a first aspect, an embodiment of this application provides a mail management method, including:
displaying a first interface of a mailbox application, where a plurality of mailbox accounts are added to the mailbox application;
receiving a classification configuration operation, and obtaining a first classification rule corresponding to a first classification folder; and
after receiving the classification configuration operation, displaying a third interface, where the third interface includes a mail list corresponding to the first classification folder, and the mail list corresponding to the first classification folder is obtained after mails of the plurality of mailbox accounts are classified according to the first classification rule.

The first interface may be a main user interface, a setting interface, or the like of the mailbox application.

The first classification folder is a classification folder corresponding to a classification category that needs to be created by entering the classification configuration operation by a user, and may be created before the user configures a classification rule, or may be automatically generated after the user configures a classification rule.

According to the mail management solution provided in this embodiment, the user can uniformly classify the mails of the plurality of mailbox accounts by using the mailbox application. This can improve convenience of searching for mails by the user and reduce time costs of managing the mails by the user.

In a possible implementation of the first aspect, the receiving a classification configuration operation, and obtaining a first classification rule corresponding to a first classification folder includes:
receiving a trigger operation that is input for the first interface, and displaying a classification configuration interface;
receiving a configuration operation on the classification configuration interface, and obtaining the first classification rule corresponding to the first classification folder; and
receiving an addition confirmation operation, and displaying a second interface, where the second interface includes the first classification folder.

In the foregoing implementation, the user can perform the classification configuration operation through a visual user interface. This improves user experience.

In a possible implementation of the first aspect, the method further includes:
when a classification folder fails to be added, displaying prompt information of the adding failure, where the prompt information of the adding failure includes a reason for the adding failure.

By using the foregoing implementation, the user may know the reason why the classified folder fails to be added. This improves user experience.

In a possible implementation of the first aspect, the classification configuration interface includes a plurality of classification rule configuration options, and the receiving a configuration operation on the classification configuration interface, and obtaining the first classification rule corresponding to the first classification folder includes:
receiving an operation of entering a classification rule in at least one of the classification rule configuration options, and obtaining the first classification rule corresponding to the first classification folder.

In a possible implementation of the first aspect, the first classification rule corresponding to the first classification folder is obtained by importing a target classification category file, and the target classification category file includes the first classification rule.

In the foregoing implementation, convenience of configuring the classification rule by the user can be improved.

In a possible implementation of the first aspect, the method further includes:
in response to the classification configuration operation, obtaining a first category name corresponding to the first classification folder, where the first category name is a folder name of the first classification folder.

In the foregoing implementation, it may be convenient for the user to set a category name.

In a possible implementation of the first aspect, the method further includes:
receiving a modification operation, and modifying classification configuration information of the first classification folder, where the classification configuration information includes: the folder name of the first classification folder and/or the first classification rule.

In the foregoing implementation, flexibility of use by the user can be improved.

In a possible implementation of the first aspect, the method further includes:
receiving an export operation, and exporting a classification category file corresponding to the first classification folder, where the classification category file includes the folder name of the first classification folder and the first classification rule.

In the foregoing implementation, it may be convenient for the user to manage and use a created classification rule.

In a possible implementation of the first aspect, the method further includes:
receiving a deletion operation, and deleting the first classification folder.

In the foregoing implementation, flexibility of use by the user can be improved.

In a possible implementation of the first aspect, the method further includes:
receiving a second operation for the first classification folder, and marking all mails in the first classification folder as a read state.

In the foregoing implementation, flexibility of use by the user can be improved.

In a possible implementation of the first aspect, the method further includes:
displaying mail status statistical information of the first classification folder, where the mail status statistical information includes: a total quantity of mails, a quantity of unread mails, and/or a quantity of read mails.

Through the foregoing implementation, the user can easily know a mail status statistical information of a classification folder. This improves convenience of use by the user.

In a possible implementation of the first aspect, the method further includes:
before displaying the third interface, receiving an operation of selecting a first mailbox account from the plurality of mailbox accounts, where
the mail list displayed on the third interface includes a mail corresponding to the first mailbox account in the first classification folder.

By using the foregoing implementation, the user can conveniently view a classified mail of any mailbox account in a classification folder. This improves flexibility of use by the user.

In a possible implementation of the first aspect, the plurality of mailbox accounts include the first mailbox account, the first classification folder includes a first mail set, and the first mail set is a mail set that classifies mails in the first mailbox account into the first classification folder according to the first classification rule; and
the method further includes: sending a first request to a first server corresponding to the first mailbox account, where the first request is used by the first server to classify mails in the first mail set into a first target folder under the first mailbox account, and the first target folder has a same name as the first classification folder.

In the foregoing implementation, classification data may be synchronized to a server corresponding to a mailbox account, so that the user may also view a classification result in another mailbox client. This can further improve convenience of use by the user and save time costs of managing a mail by the user.

In a possible implementation of the first aspect, the first request includes a moving or copying instruction, and the first request is specifically used by the first server to move or copy the mails in the first mail set to the first target folder.

In a possible implementation of the first aspect, the first request includes the first classification rule, and the first request is specifically used by the first server to classify the mails in the first mailbox account into the first target folder according to the first classification rule.

In the foregoing implementation, resource overheads can be reduced.

In a possible implementation of the first aspect, when a classification synchronization function is enabled, the first request is sent to the first server; and the method further includes:
receiving a first operation, and enabling or disabling the classification synchronization function.

In the foregoing implementation, flexibility of use by the user can be improved.

In a possible implementation of the first aspect, the sending a first request to a first server corresponding to the first mailbox account includes:
sending a first sub-request to the first server corresponding to the first mailbox account, where the first sub-request is used by the first server to create the first target folder under the first mailbox account; and
sending a second sub-request to the first server after receiving a response message that is returned by the first server and that indicates that the first target folder is successfully created, where the second sub-request is used by the first server to classify the mails in the first mail set into the first target folder.

According to a second aspect, an embodiment of this application provides a mail management apparatus, including a display module, an input module, and a processing module, where
the display module is configured to display a first interface of a mailbox application, where a plurality of mailbox accounts are added to the mailbox application;
the input module is configured to receive a classification configuration operation;
the processing module is configured to obtain a first classification rule corresponding to a first classification folder; and
the display module is further configured to: after the classification configuration operation is received, display a third interface, where the third interface includes a mail list corresponding to the first classification folder, and the mail list corresponding to the first classification folder is obtained after mails of the plurality of mailbox accounts are classified according to the first classification rule.

In a possible implementation of the second aspect, the display module is further configured to: after the input module receives a trigger operation that is input for the first interface, display a classification configuration interface;
the processing module is specifically configured to: after the input module receives a configuration operation of a user on the classification configuration interface, obtain the first classification rule corresponding to the first classification folder; and
the display module is further configured to: after the input module receives an addition confirmation operation, display a second interface, where the second interface includes the first classification folder.

In a possible implementation of the second aspect, the display module is further configured to:
when a classification folder fails to be added, display prompt information of the adding failure, where the prompt information of the adding failure includes a reason for the adding failure.

In a possible implementation of the second aspect, the classification configuration interface includes a plurality of classification rule configuration options, and the processing module is specifically configured to:
after the input module receives an operation of entering a classification rule by the user in at least one of the classification rule configuration options, obtain the first classification rule corresponding to the first classification folder.

In a possible implementation of the second aspect, the first classification rule corresponding to the first classification folder is obtained by importing a target classification category file, and the target classification category file includes the first classification rule.

In a possible implementation of the second aspect, the processing module is further configured to:
in response to the classification configuration operation, obtain a first category name corresponding to the first classification folder, where the first category name is a folder name of the first classification folder.

In a possible implementation of the second aspect, the processing module is further configured to:
after the input module receives a modification operation, modify classification configuration information of the first classification folder, where the classification configuration information includes: the folder name of the first classification folder and/or the first classification rule.

In a possible implementation of the second aspect, the processing module is further configured to:
after the input module receives an export operation, export a classification category file corresponding to the first classification folder, where the classification category file includes the folder name of the first classification folder and the first classification rule.

In a possible implementation of the second aspect, the processing module is further configured to:
after the input module receives a delete operation, delete the first classification folder.

In a possible implementation of the second aspect, the processing module is further configured to:
after the input module receives a second operation for the first classification folder, mark all mails in the first classification folder as a read state.

In a possible implementation of the second aspect, the display module is further configured to:
display mail status statistical information of the first classification folder, where the mail status statistical information includes: a total quantity of mails, a quantity of unread mails, and/or a quantity of read mails.

In a possible implementation of the second aspect, the input module is further configured to:
before the display module displays the third interface, receive an operation of selecting a first mailbox account from the plurality of mailbox accounts; and
the mail list displayed on the third interface includes a mail corresponding to the first mailbox account in the first classification folder.

In a possible implementation of the second aspect, the plurality of mailbox accounts include the first mailbox account, the first classification folder includes a first mail set, and the first mail set is a mail set that classifies mails in the first mailbox account into the first classification folder according to the first classification rule; and
the apparatus further includes:

a communication module, configured to send a first request to a first server corresponding to the first mailbox account, where the first request is used by the first server to classify mails in the first mail set into a first target folder under the first mailbox account, and the first target folder has a same name as the first classification folder.

In a possible implementation of the second aspect, the first request includes a moving or copying instruction, and the first request is specifically used by the first server to move or copy the mails in the first mail set to the first target folder.

In a possible implementation of the second aspect, the first request includes the first classification rule, and the first request is specifically used by the first server to classify the mails in the first mailbox account into the first target folder according to the first classification rule.

In a possible implementation of the second aspect, the communication module is specifically configured to: when a classification synchronization function is enabled, send a first request to the first server, and the processing module is further configured to:
after the input module receives a first operation, enable or disable the classification synchronization function.

In a possible implementation of the second aspect, the communication module is further configured to:
send a first sub-request to the first server corresponding to the first mailbox account, where the first sub-request is used by the first server to create the first target folder under the first mailbox account; and
send a second sub-request to the first server after receiving a response message that is returned by the first server and that indicates that the first target folder is successfully created, where the second sub-request is used by the first server to classify the mails in the first mail set into the first target folder.

According to a third aspect, an embodiment of this application provides an electronic device, including a memory and a processor. The memory is configured to store a computer program, and the processor is configured to invoke the computer program to perform the method according to any one of the first aspect or implementations of the first aspect.

According to a fourth aspect, an embodiment of this application provides a computer-readable storage medium. The computer-readable storage medium stores a computer program. When the computer program is executed by a processor, the method according to any one of the first aspect or implementations of the first aspect is implemented.

According to a fifth aspect, an embodiment of this application provides a computer program product. When the computer program product runs on an electronic device, the electronic device is enabled to perform the method according to any one of the first aspect or implementations of the first aspect.

According to a sixth aspect, an embodiment of this application provides a chip system, including a processor, where the processor is coupled to a memory, and the processor executes a computer program stored in the memory, to implement the method according to any one of the first aspect or implementations of the first aspect. The chip system may be a single chip or a chip module including a plurality of chips.

It may be understood that, for beneficial effects of the second aspect to the sixth aspect, refer to related descriptions in the first aspect. Details are not described herein again.

### BRIEF DESCRIPTION OF DRAWINGS

FIG. 1 is a schematic diagram of a system architecture of a mail management system according to an embodiment of this application;
FIG. 2(a) to FIG. 2(d) are a schematic diagram of some user interfaces according to an embodiment of this application;
FIG. 3 is a schematic diagram of function modules of a mailbox client according to an embodiment of this application;
FIG. 4 is a schematic flowchart of a mail management method according to an embodiment of this application;
FIG. 5(a) to FIG. 13 are schematic diagrams of some other user interfaces according to an embodiment of this application;
FIG. 14 is a schematic flowchart of interaction between a mailbox client and an ISP server according to an embodiment of this application;
FIG. 15 to FIG. 18(d) are schematic diagrams of still some other user interfaces according to an embodiment of this application;
FIG. 19 is a schematic flowchart of another mail management method according to an embodiment of this application;
FIG. 20 is a schematic diagram of a structure of an electronic device according to an embodiment of this application; and
FIG. 21 is a schematic diagram of a structure of a mail management apparatus according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application. The following several specific embodiments may be combined with each other, and a same or similar concept or process may not be described repeatedly in some embodiments.

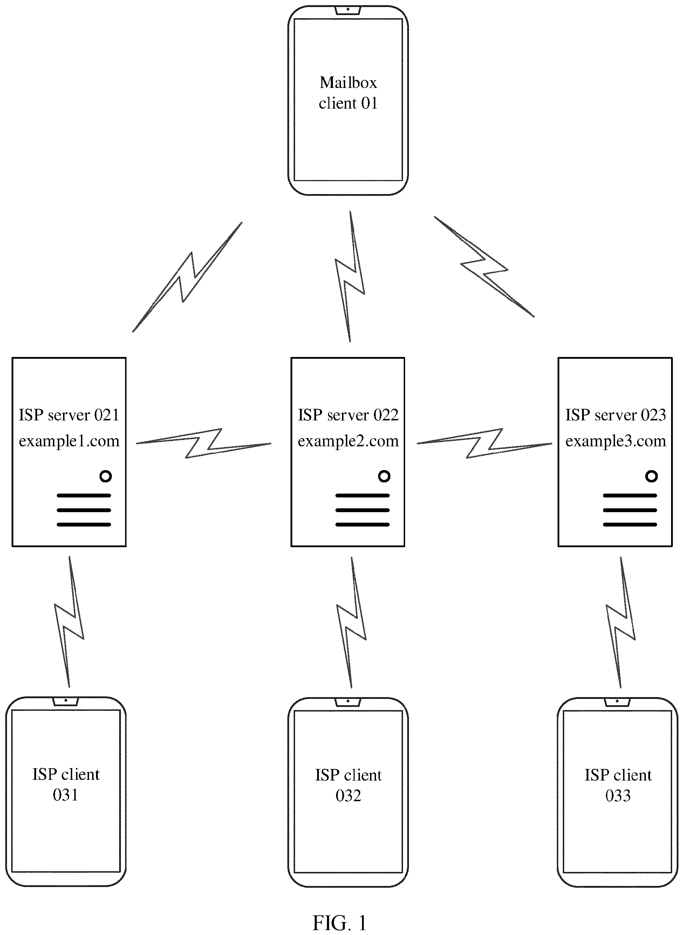

First, a mail management system in an embodiment of this application is described. Refer to FIG. 1. FIG. 1 is a schematic diagram of a system architecture of a mail management system according to an embodiment of this application.

As shown in FIG. 1, the mail management system may include: a mailbox client 01, a server (referred to as an ISP server herein) provided by a plurality of internet service providers (internet service providers, ISPs), and an ISP client corresponding to each ISP server. For example, herein, there are three ISPs, which are respectively an ISP 1, an ISP 2, and an ISP 3, corresponding ISP servers are respectively an ISP server 021, an ISP server 022, and an ISP server 023, and corresponding ISP clients are respectively an ISP client 031, an ISP client 032, and an ISP client 033.

Domain names of ISP servers are different. For example, a domain name of the ISP server 021 is "example1.com", a domain name of the ISP server 022 is "example2.com", and a domain name of the ISP server 023 is "example3.com".

Functions of the ISP servers are similar, and functions of the ISP clients are similar. For ease of description, the following uses the ISP server 021 and the ISP client 031 as an example for description.

The ISP server 021 may provide mail transmission, storage, account registration, and login services. A user may enter a registered mailbox account and a corresponding mailbox password on the ISP client 031 corresponding to the user, log in to the ISP server 021, and receive, send, view, and manage mails under the mailbox account.

The ISP server 021 may also provide an authorization and authentication service. The user may authorize an account permission to a third-party application. The third-party application may access the ISP server 021 by using an authorization credential (for example, an authorization code) issued by the ISP server 021. The ISP server 021 may perform authentication on the authorization credential, and may provide an authorized resource for the third-party application after the authentication succeeds. The ISP server 021 may alternatively issue an access token to the ISP client 031 after the ISP client 031 successfully logs in. Subsequently, the ISP client 031 may access the ISP server 021 by using the access token. The ISP server 021 may authenticate the access token, and may provide an accessed resource for the ISP client 031 after the authentication succeeds.

The ISP client 031 may send a mail to the corresponding ISP server 021 by using a mail protocol like the simple mail transfer protocol (simple mail transfer protocol, SMTP) or the hypertext transfer protocol (hypertext transfer protocol, HTTP), and obtain a mail from the corresponding ISP server 021 by using a mail protocol like the internet message access protocol (internet message access protocol, IMAP) or the HTTP protocol. Mail transmission may be performed between ISP servers by using the SMTP protocol.

The ISP server 021 may be deployed on one or more servers. The ISP client 031 may be implemented in a form of an app, a web page, an applet, or the like. The ISP client 031 may run on an electronic device like a mobile phone, a tablet computer, a computer, an intelligent wearable device, or a smart home device (in FIG. 1, a mobile phone is used as an example for description). One or more ISP clients, for example, both the ISP client 031 and the ISP client 032, may run on one electronic device.

The mailbox client 01 may provide a multi-mailbox account management function. The user may add a plurality of mailbox accounts on the mailbox client 01, and send, receive, view, and manage mails under the plurality of mailbox accounts.

In some embodiments, some ISP clients may also provide a multi-mailbox account management function, that is, the ISP client and the mailbox client 01 may be a same client.

The mailbox client 01 may be an independent app, or may be integrated into another app. The following uses an example in which the mailbox client 01 is an independent app (referred to as a mailbox app below) for description.

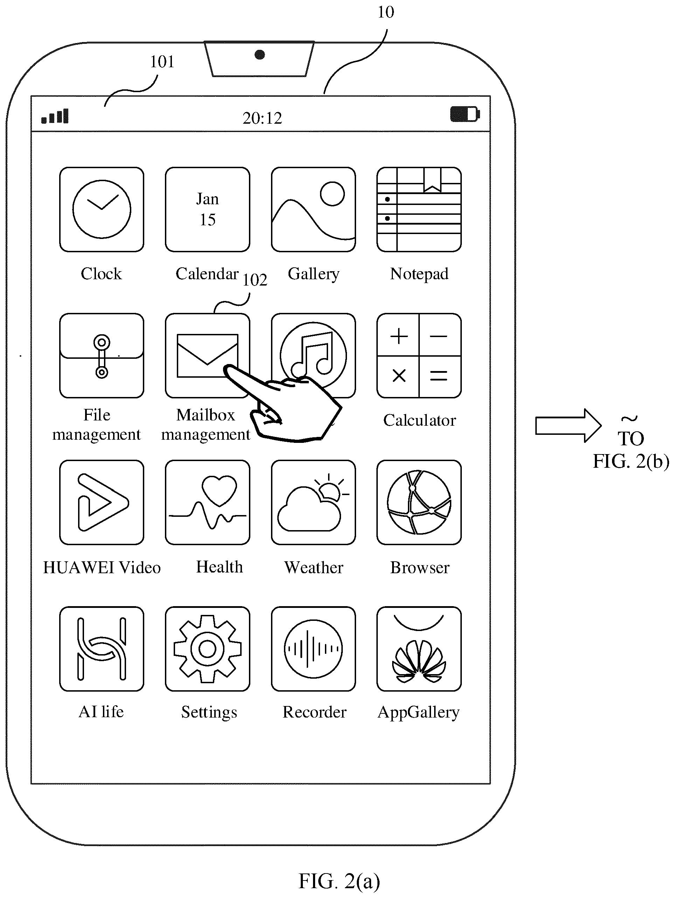

FIG. 2(a) is a schematic diagram of a home screen 10 displayed by an electronic device. The home screen 10 may include a status bar 101 and icons of a plurality of apps, for example, an icon 102 corresponding to a mailbox app. The status bar 101 may include information such as a signal strength icon, time, and a remaining power. It may be understood that, in some embodiments, the status bar 101 may further include an operator name, a mobile network identifier (for example, 4G or 5G), a Bluetooth icon, a wireless fidelity (wireless fidelity, Wi-Fi) icon, an external device icon, a working mode icon, and other icons that indicate status information of the electronic device. The home screen 10 may further include a navigation bar, a widget (widget), a dock bar, and the like.

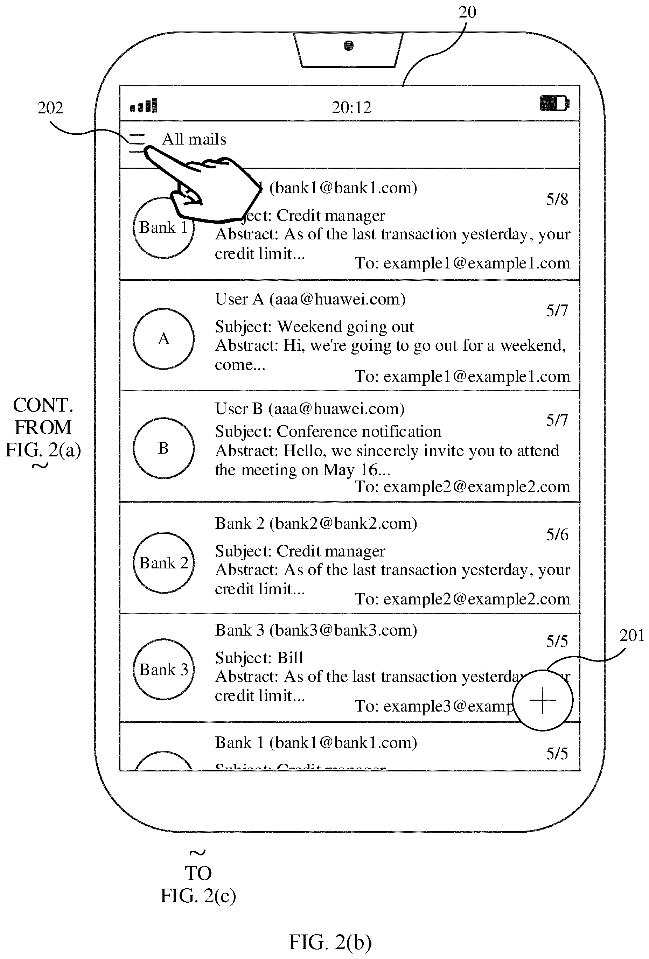

The electronic device may perform a corresponding function in response to an operation entered by the user, as shown in FIG. 2(a) and FIG. 2(b). After the user taps an icon 102 corresponding to the mailbox app, the electronic device may respond to the tap operation of the user, open the mailbox app, and display a main user interface 20 corresponding to the mailbox app. For example, as shown in FIG. 2(b), the main user interface 20 may display an inbox interface by default. On the inbox interface, a mail list is displayed according to a time sequence of received mails. The user can tap a display area of a mail in the mail list to view a mail body, and swipe up or down on the mail list to view another mail. The main user interface 20 may provide a control 201 and a control 202. The user may create a mail by using the control 201, and switch a mailbox account and a folder by using the control 202.

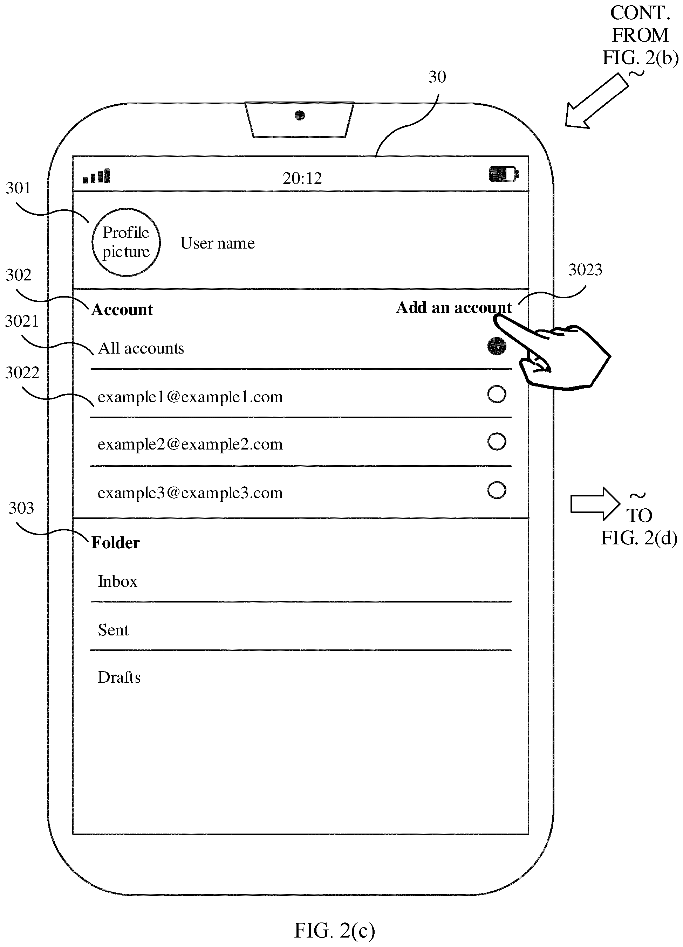

For example, as shown in FIG. 2(b) and FIG. 2(c), after the user taps the control 202, the electronic device may display a user interface 30, and the user interface 30 may include an application account bar 301, a mailbox account bar 302, and a folder bar 303.

The mailbox app may provide application account registration and login functions. The application account bar 301 may display a logged-in application account and profile picture information of the user. The user may tap a profile picture, a user name, or a display area corresponding to the application account bar 301 to view and edit specific application account information.

The mailbox account bar 302 may display account options 3022 that correspond to all mailbox accounts and that are added by the user and an "All accounts" option 3021. For example, the mailbox accounts added by the user include example1@example1.com, example2@example2.com, and example3@example3.com. When the user selects an account option 3022 corresponding to a mailbox account, for example, selects an account option 3022 corresponding to "example1@example1.com", the electronic device may display, on the main user interface 20, a mail of the mailbox account "example1@example1.com". When the user selects the "All accounts" option 3021, the electronic device may display, on the main user interface 20, mails of all mailbox accounts added by the user.

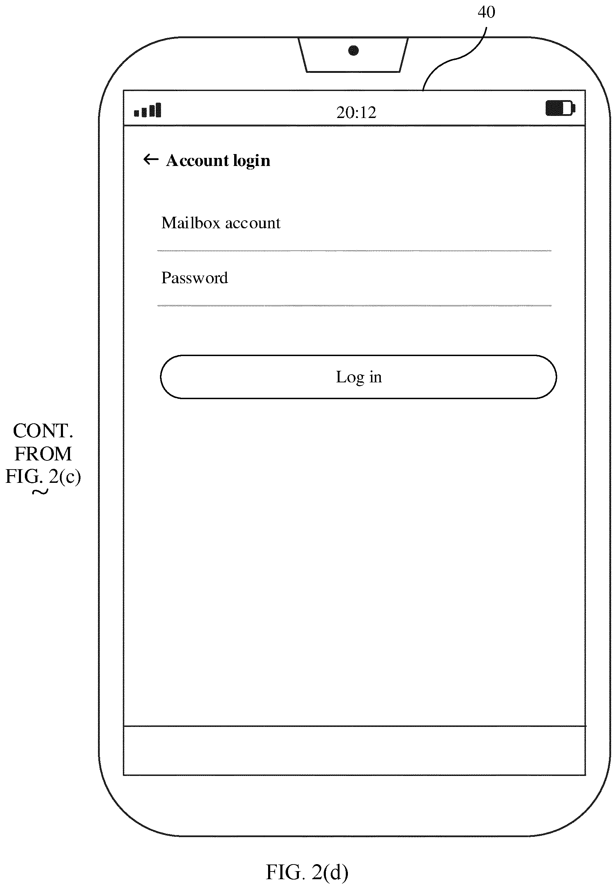

The mailbox account bar 302 may further provide an "Add an account" option 3023, and the user may add a mailbox account by using the option. As shown in FIG. 2(c) and FIG. 2(d), after the user taps the "Add an account" option 3023, the electronic device may display an account login interface 40. The user may enter a to-be-added mailbox account, and enter a password to log in to the mailbox account, to add the mailbox account to the mailbox app.

The password may be specifically an account password or an authorization code for logging in to and adding the mailbox account. After the mailbox account is successfully added, the mailbox app may access, by using the account password or the authorization code, an ISP server corresponding to the mailbox account. Alternatively, the ISP server may issue an access token to the mailbox app after authentication succeeds in a process in which the user adds the mailbox account, and subsequently, the mailbox app may access, by using the access token, the ISP server corresponding to the mailbox account.

In addition, after the mailbox account is successfully added, the mailbox app may pull a mail under the mailbox account from the ISP server corresponding to the mailbox account, and display and save related mail data (including mail metadata and mail content). Mails that are first pulled by the mailbox app from the ISP server corresponding to the added mailbox account may be all mails of the mailbox account, or may be a preset quantity of mails, or may be all mails within a time period, for example, mails of a recent week. During running, the mailbox app may respond to a mail receiving operation entered by the user, and pull a mail from the ISP server. The receiving operation may be an operation of tapping, by the user, a "Receive" option provided in the mailbox app, or may be a sliding operation performed by the user on the inbox interface. The mailbox app may alternatively pull a mail from the ISP server at a specific interval. The interval may be, for example, 5 minutes, and may be a fixed value, or may be set by the user.

As shown in FIG. 2(c), the folder bar 303 may include general folders such as an inbox folder, a sent folder, and a drafts folder. After the user selects a folder, the electronic device may display, in the main user interface 20, a mail in the folder under a mailbox account currently selected by the user. For example, a currently selected mailbox account in the mailbox account bar 302 is "example1@example1.com", and the user selects a folder "Sent". The electronic device may display a sent mail of the account "example1@example1.com" in the main user interface 20.

It may be understood that an operation entered by the user on the electronic device is not limited to a touch control operation, and may alternatively be a voice control operation, an air gesture operation, a remote control operation, or the like. This is not particularly limited in this embodiment of this application. For ease of description, the touch control operation is used as an example for description in this embodiment of this application.

In addition, the user interface in this embodiment of this application is only an example, and is not intended to limit this application. In some embodiments, the user interface displayed by the electronic device may include more or fewer interface elements than those shown in the figure, to implement more or fewer functions. The functions may be implemented by using other interface elements, or may be implemented in another user interface. This is not particularly limited in this embodiment.

As described above, when managing a mailbox account by using the mailbox app, the user may filter out a mail that needs to be viewed by switching a mailbox account and a folder. However, as a quantity of mails increases, the user needs to spend more time and energy in searching for a specific mail. To save the time of the user, some mailbox clients provide a label classification function, but only mails of a single mailbox account that is logged in are classified. In addition, the label classification function is not universal and cannot be applied to other mailbox clients, and the user cannot view a corresponding label in the mailbox app.

For the foregoing problem, an embodiment of this application provides a mail management solution, so that mails of a plurality of mailbox accounts can be uniformly classified. This reduces time costs of managing mails by a user; and may synchronize classification data to each ISP server, so that the user can also view a classification result in another mailbox client.

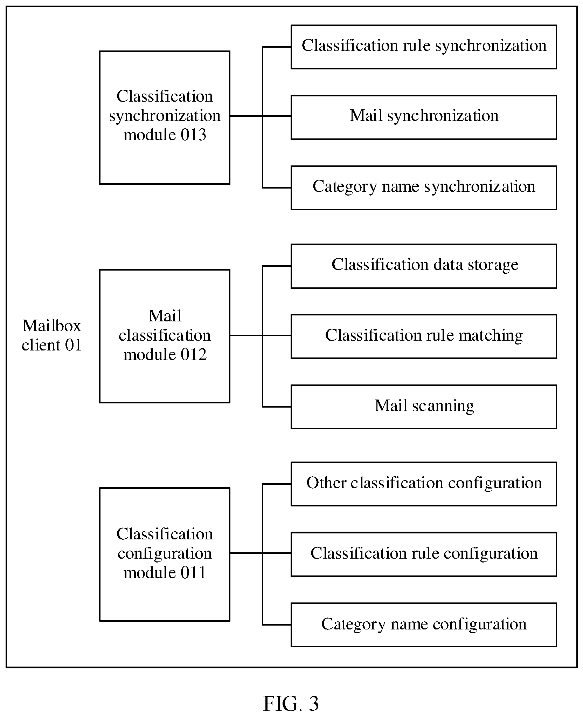

FIG. 3 is a schematic diagram of function modules of a mailbox client. As shown in FIG. 3, to implement the foregoing mail management function, in this embodiment of this application, the following modules may be added to the mailbox client 01: a classification configuration module 011, a mail classification module 012, and a classification synchronization module 013.

The classification configuration module 011 is configured to set a classification name, a classification rule, and other classification-related configurations, for example, whether to perform cloud synchronization.

The mail classification module 012 is configured to uniformly classify mails of each mailbox account added in the mailbox client. Specifically, the module may scan mails of each mailbox account, determine whether the scanned mails match a classification rule, and then store feature data (that is, classification data) of a mail that matches the classification rule into a classification table.

A field in the classification table may include but is not limited to: a category name, a mailbox account to which a mail belongs, and an identifier of the mail. The identifier of the mail may include a mailbox and a uid. The mailbox and the uid of the mail are a unique identifier of the mail, and a mail may be uniquely determined by using a mailbox and a uid.

A user can alternatively manually classify a mail into a category. The manually classified mail can be recorded in the classification table.

A classification result is not limited to a form of the classification table, and may alternatively be presented in another form. This is not particularly limited in this embodiment.

The classification synchronization module 013 is configured to synchronize classification data to each ISP server, where the classification data may include: a classification name, a classification rule, feature data of a classified mail, and/or the like.

The following describes a process of mail classification management in detail.

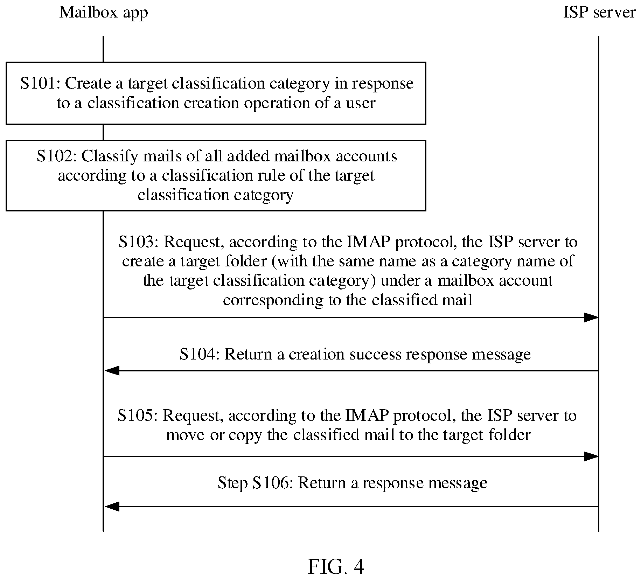

FIG. 4 is a schematic flowchart of a mail management method according to an embodiment of this application. As shown in FIG. 4, the method may include the following steps.

Step S101: A mailbox app creates a target classification category in response to a classification creation operation of a user.

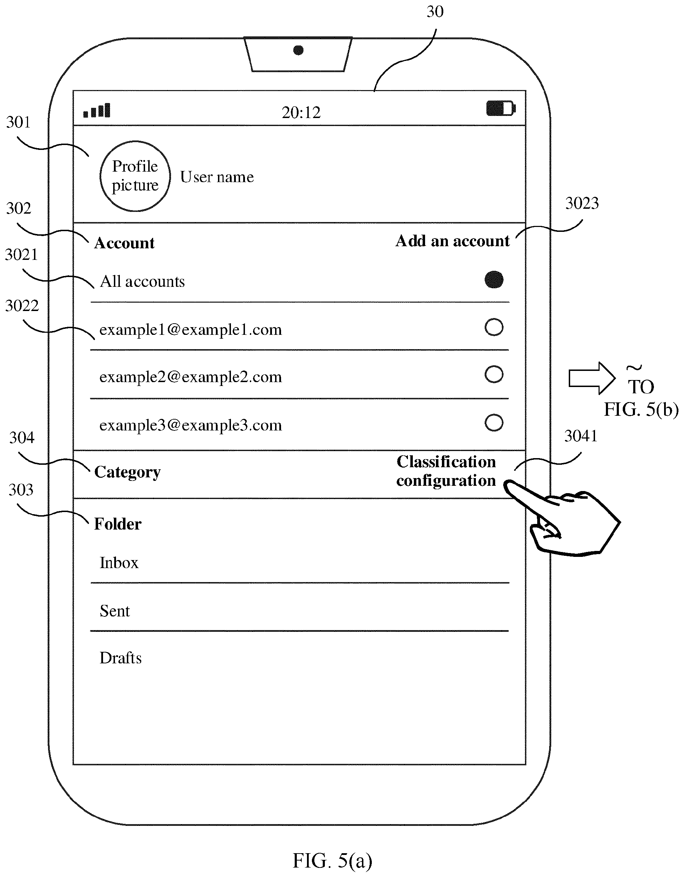

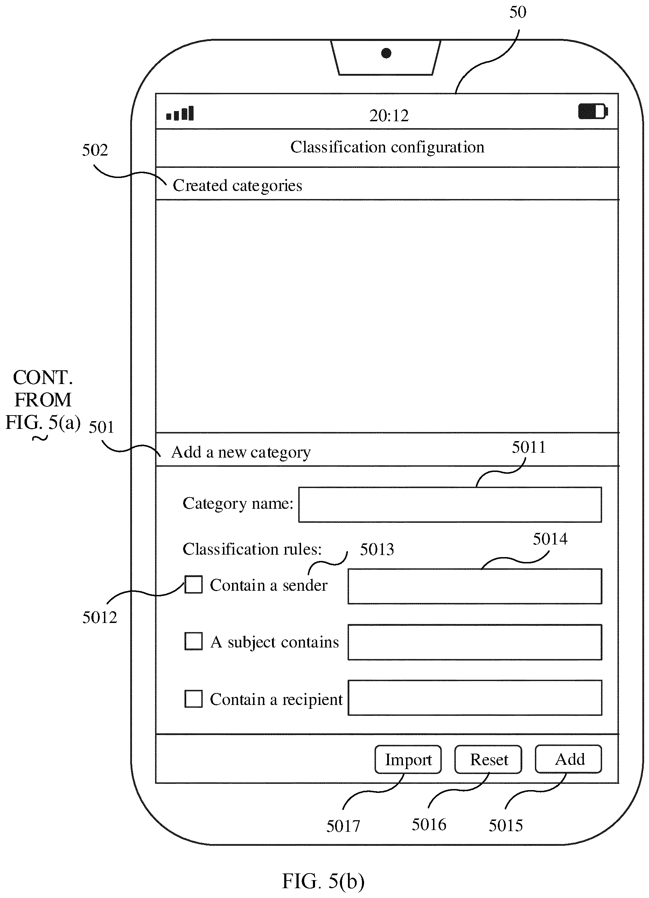

As shown in FIG. 5(a), a classification bar 304 may be added to the user interface 30, and the classification bar 304 may include a "Classification configuration" option 3041. After tapping the "Classification configuration" option 3041, the user may open a classification configuration interface 50 (refer to FIG. 5(b)).

The classification configuration interface 50 may include an "Add a new category" bar 501 and a "Created categories" bar 502. The user may add a new classification category by using the "Add a new category" bar 501, and view and edit a created classification category by using the "Created categories" bar 502. For example, herein, the user has not created any classification category, and no classification category is displayed in the "Created categories" bar 502.

The "Add a new category" bar 501 may include: a category name input box 5011, a plurality of classification rule options, and an "Add" button 5015, where each classification rule option has a corresponding check box 5012, and each classification rule option may include rule description information 5013 and a rule input box 5014.

The user may enter a to-be-added category name in the category name input box 5011. For example, a category name entered by the user is "Bill", that is, a target category to be created by the user is a bill category.

The user may select a classification rule option by using the check box 5012. For the selected classification rule option, specific rule information may be entered in a rule input box 5014 of the selected classification rule option. Then, the user may tap the "Add" button 5015 to confirm adding of a corresponding classification category.

The rule description information 5013 may include a field (referred to as a classification field below) searched for during classification. The classification field may include a plurality of fields in the following fields: a sender, a recipient, a subject, a full text, time, a classification account, an attachment, and the like. Correspondingly, a classification rule may include a plurality of rules in the following rules: containing a target sender, a subject containing a first target keyword, containing a target recipient, a full text containing a second target keyword, mail sending time being within a target time period, an added target mailbox account being classified, an attachment including a third target keyword, and the like.

A mail address is generally in a format of "user name@domain name". For a sender and a recipient, the user can enter all or part of fields of a mail address, that is, the user can enter "user name@domain name", or can enter only "user name", or can enter only "domain name".

The rule input box 5014 may be a text input box, a drop-down selection box, a time input box, or the like, and may be specifically selected based on a requirement. This is not specifically limited in this embodiment.

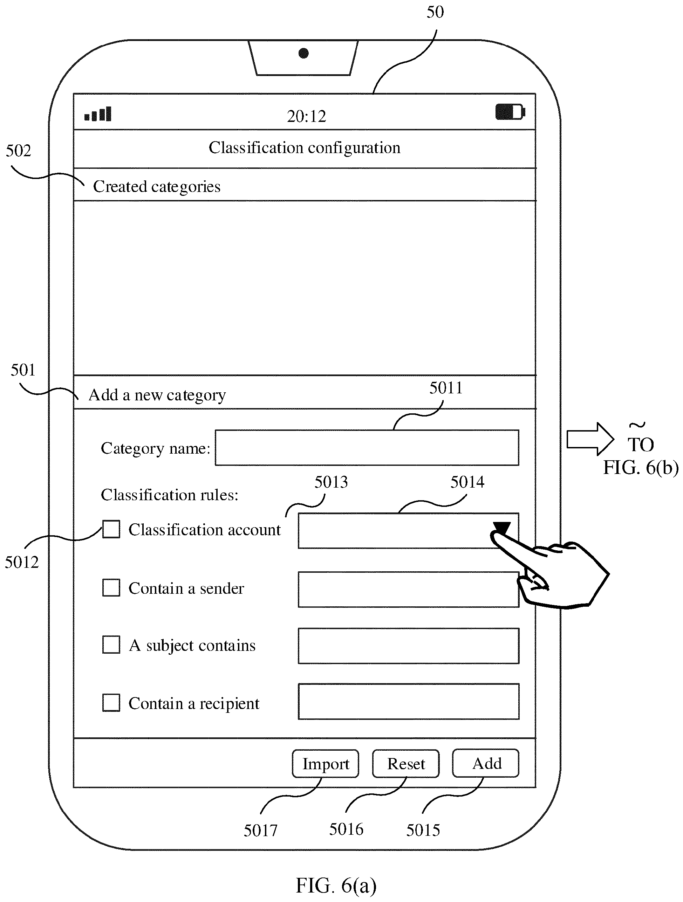

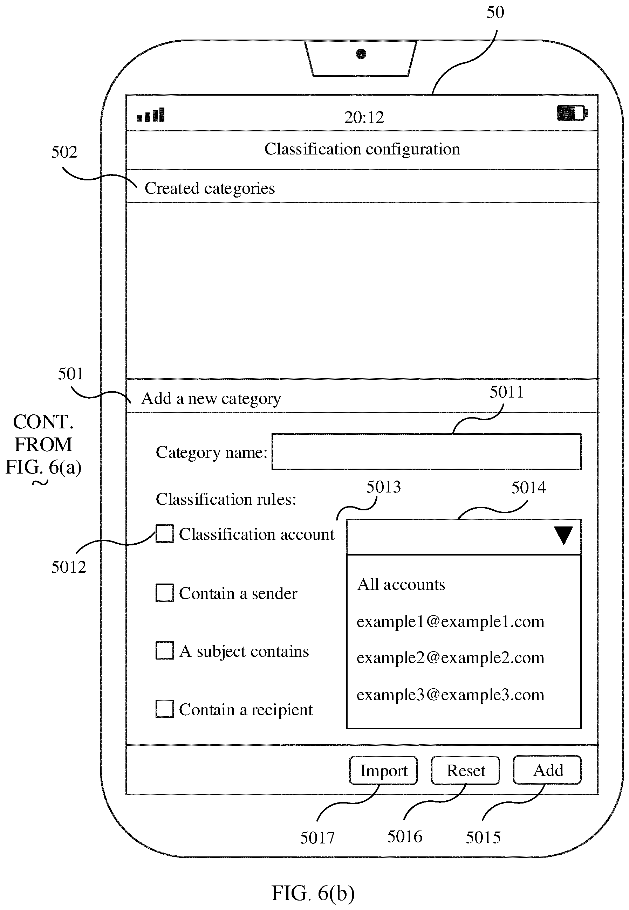

For example, in FIG. 5(b), the classification rule option includes options corresponding to a sender, a subject, and a recipient, where a rule input box 5014 of each option is a text input box. FIG. 6(a) and FIG. 6(b) show another possible user interface. As shown in FIG. 6(a), in addition to the classification rule option shown in FIG. 5(b), an option corresponding to the classification account is further included. A rule input box 5014 of the option is a drop-down selection box. After the user taps the drop-down selection box, as shown in FIG. 6(b), a drop-down list may be displayed, and the drop-down list includes options corresponding to all accounts, example1@example1.com, example2@example2.com, and example3@example3.com. The user can select an added mailbox account to be classified from the drop-down list.

For a selected classification rule option, after a classification category is successfully created, during classification, the mailbox app determines, based on a classification field involved in the classification rule option, whether a scanned mail matches rule information in the classification field, to determine whether the mail meets a classification rule corresponding to the classification rule option.

For example, if a classification rule of the "Bill" category set by the user is "Contain a sender: bank1@bank1.com, bank2@bank2.com, or bank3@bank3.com", after the "Bill" category is successfully created, the mailbox app determines, when performing classification, whether a sender of a scanned mail is "bank1@bank1.com", "bank2@bank2.com", or "bank3@bank3.com". If the sender of the scanned mail is "bank1@bank1.com", "bank2@bank2.com", or "bank3@bank3.com", the mail is classified under the "Bill" category.

When the user selects a plurality of classification rule options, the selected classification rule options may be in an "and" relationship, that is, when a scanned mail meets classification rules corresponding to the classification rule options, the mail is classified under the target classification category. The selected classification rule options may be in an "or" relationship, that is, when a scanned mail meets a classification rule corresponding to any classification rule option, the mail is classified under the target classification category. Alternatively, the "Add a new category" bar 501 may include an option used to select a relationship between classification rule options, and the user may select, by using the option, whether a relationship between the classification rule options is "and" or "or".

For ease of use by the user, as shown in FIG. 5(b), the "Add a new category" bar 501 may further include: a "Reset" button 5016 and an "Import" button 5017.

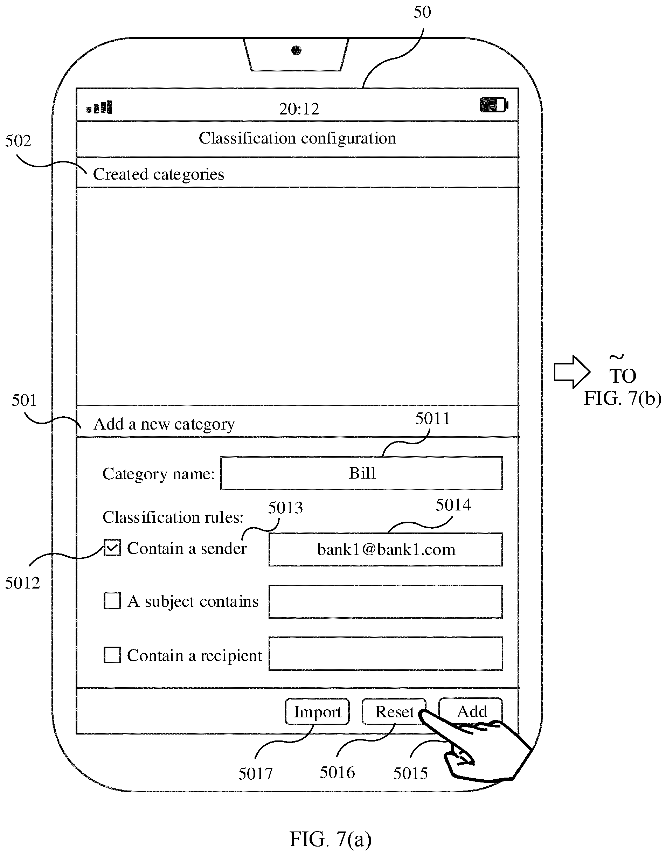

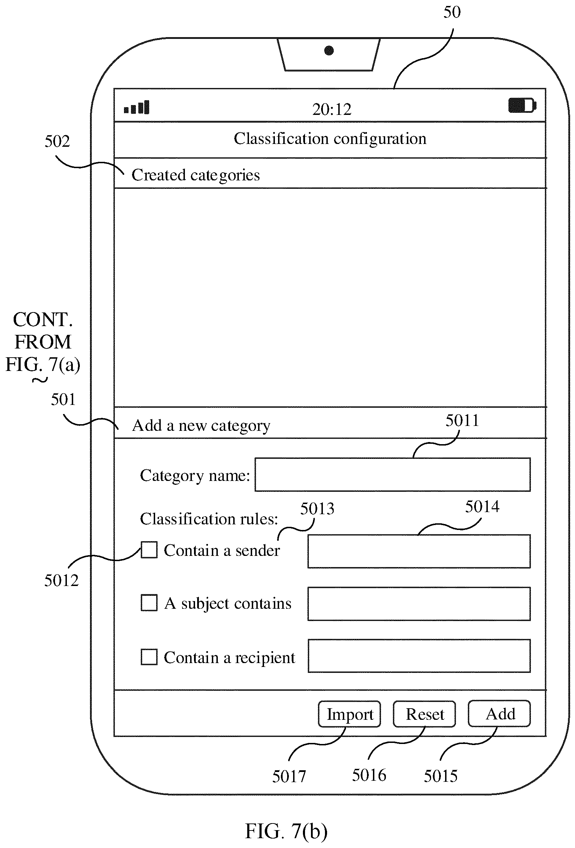

As shown in FIG. 7(a), the user enters, in the category name input box 5011, a category name: bill, and enters, in the rule input box 5014 corresponding to a sender: bank1@bank1.com. After the user taps the "Reset" button 5016, as shown in FIG. 7(b), entered classification configuration information may be cleared.

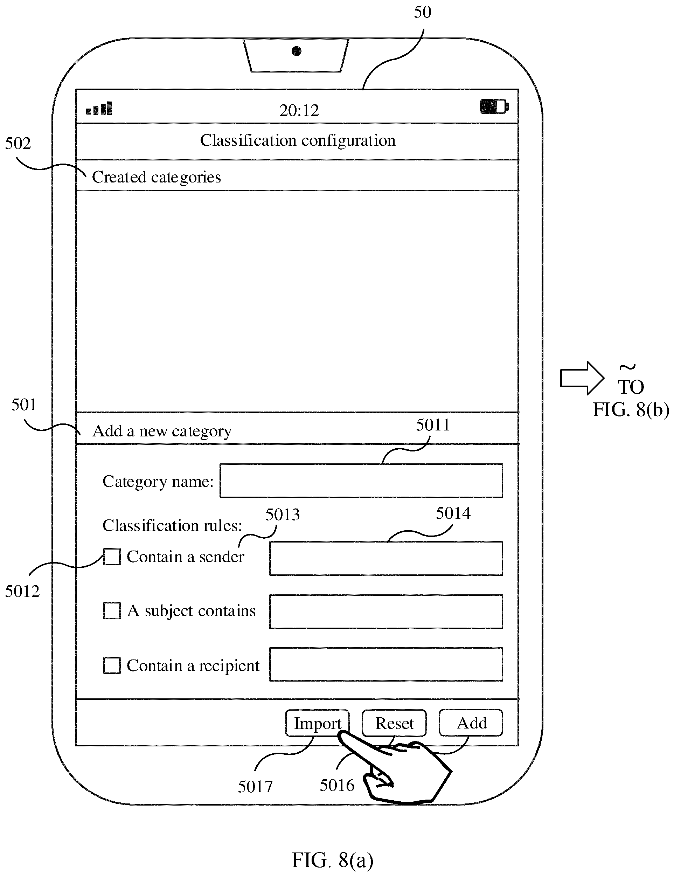

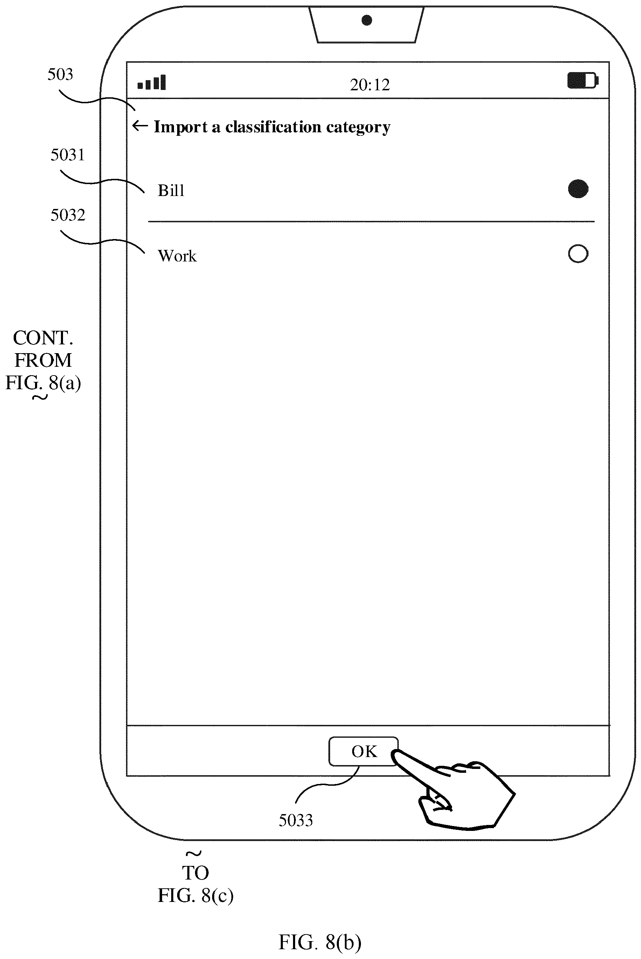

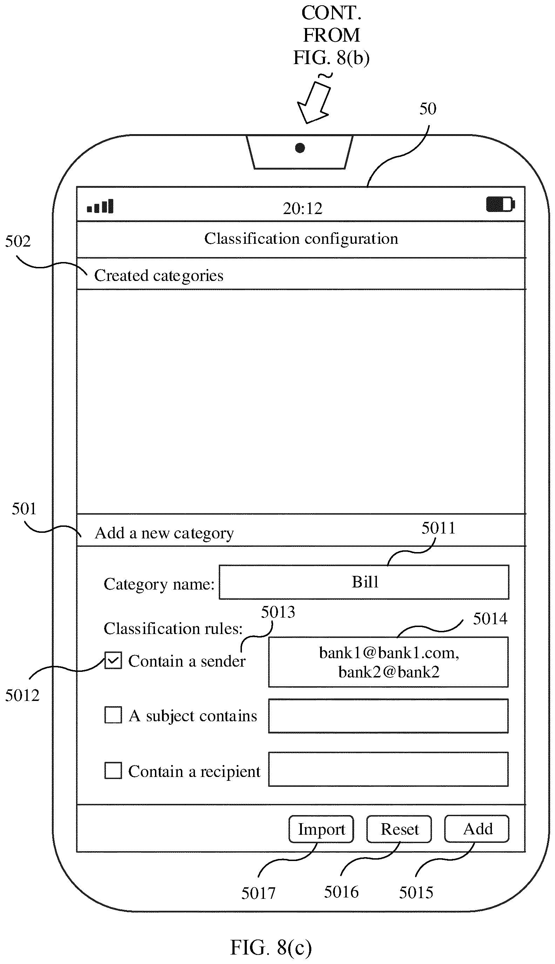

As shown in FIG. 8(a) and FIG. 8(b), the user may tap the "Import" button 5017 to open an import interface 503. The import interface 503 may display a classification category file in the electronic device. For example, the electronic device stores a classification category file 5031 corresponding to a bill category and a classification category file 5032 corresponding to a work category. The user selects the classification category file 5031 corresponding to the bill category and taps an "OK" button 5033, as shown in FIG. 8(c). The mailbox app can automatically configure a category name and a classification rule based on the file.

A classification category file includes information such as a classification name and a classification rule of a classification category. The file may be generated after the user exports a locally created classification category, or may be obtained from another electronic device.

In addition, the mailbox app may also provide classification templates corresponding to some relatively common and general classification categories, for example, a bill template. A category name in the bill template is "Bill", and a sender in a classification rule may include enterprise mailbox accounts corresponding to banks. Similar to the import function, a corresponding button may be added to the "Add a new category" bar 501. The user may select a classification template by using the button, and then the mailbox app may automatically configure a category name and a classification rule based on the classification template selected by the user.

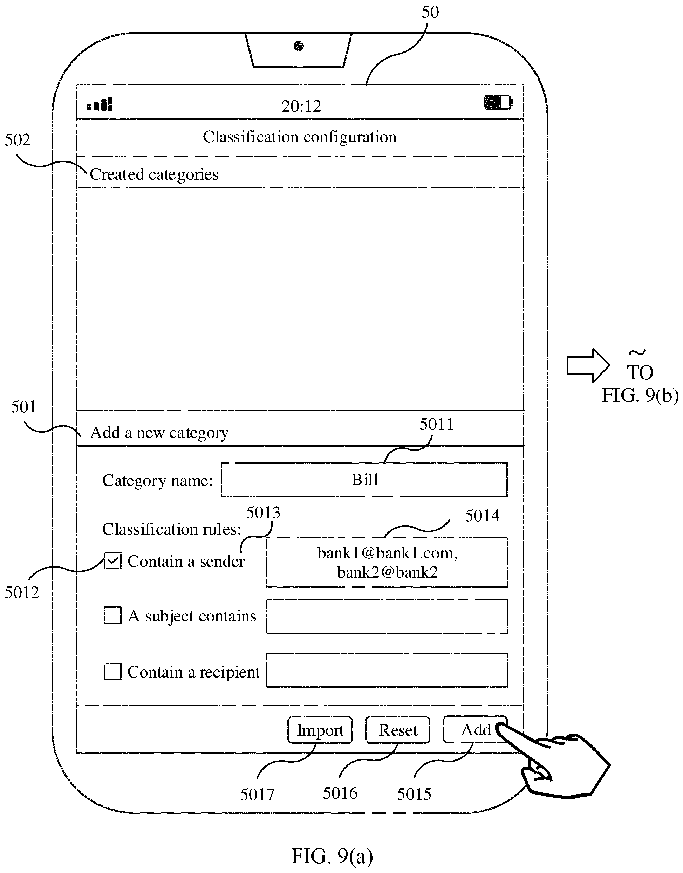

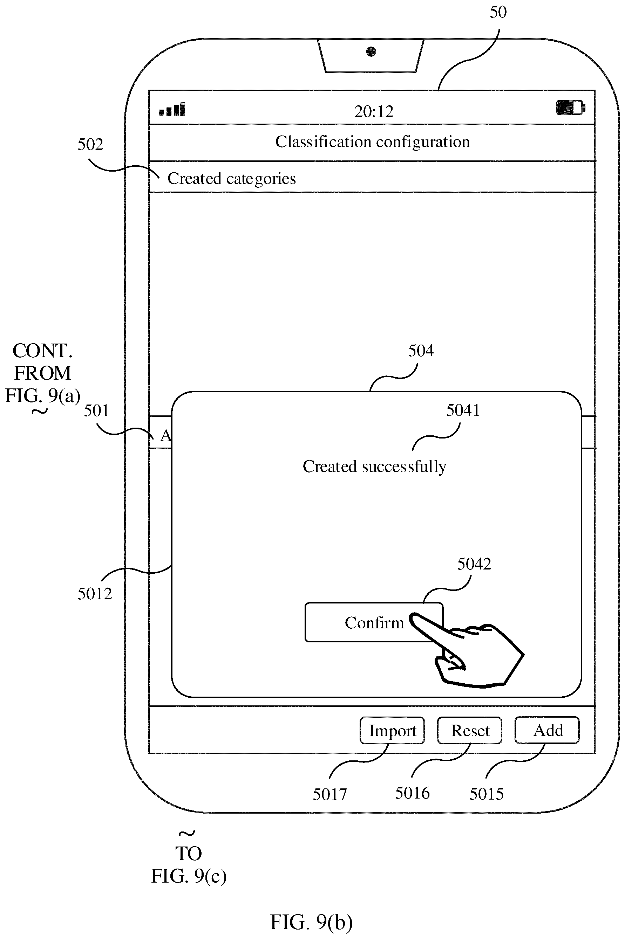

After entering classification configuration information (including a category name and a classification rule), the user can tap the "Add" button 5015 to add a corresponding category. As shown in FIG. 9(a) and FIG. 9(b), after the user taps the "Add" button 5015, the mailbox app may display a dialog box 504, and the dialog box 504 may display prompt information 5041 used to prompt that creation succeeds or fails. If the user enters a category name and a classification rule, and the entered category name is not the same as a category name of a created classification category, the dialog box 504 may display prompt information 5041 indicating that creation succeeds, as shown in FIG. 9(b); otherwise, prompt information 5041 indicating that creation fails may be displayed, and a cause for a creation failure may be prompted. For example, when the user does not enter a category name (or a classification rule), the user may be prompted to enter a category name (or a classification rule). When a user enters a category name that is the same as a category name of a created classification category, the system displays a message indicating that category names are the same.

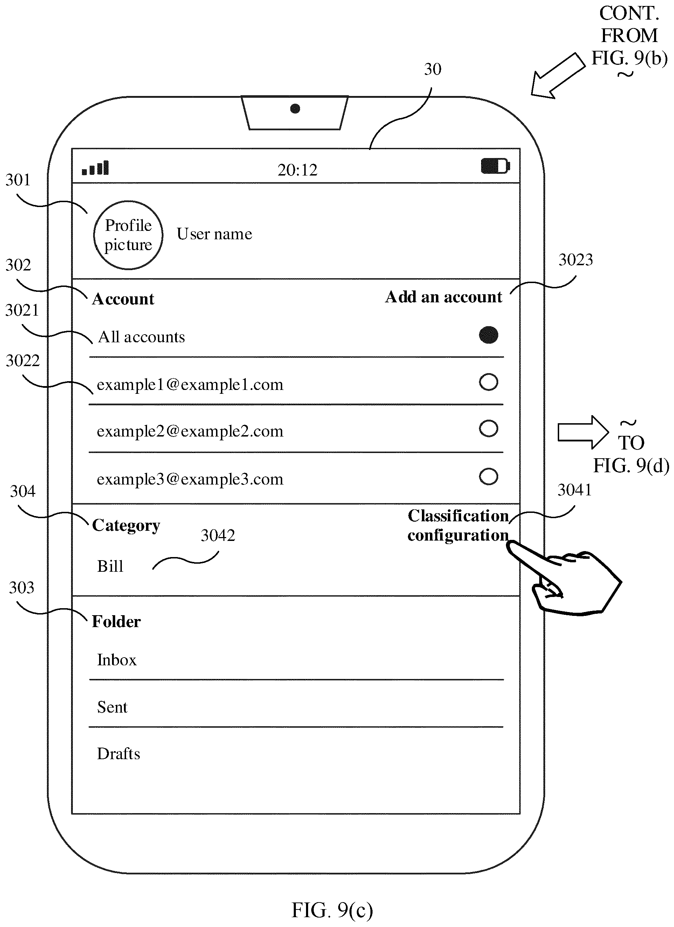

The dialog box 504 may further include a "Confirm" button 5042, as shown in FIG. 9(b) and FIG. 9(c). After a classification category is successfully created, the user taps the "Confirm" button 5042, and the mailbox app may return to the user interface 30. In this case, the classification bar 304 of the user interface 30 may display a newly added bill category folder 3042 (namely, a folder corresponding to the target classification category, where a name of the folder is a category name of the target classification category).

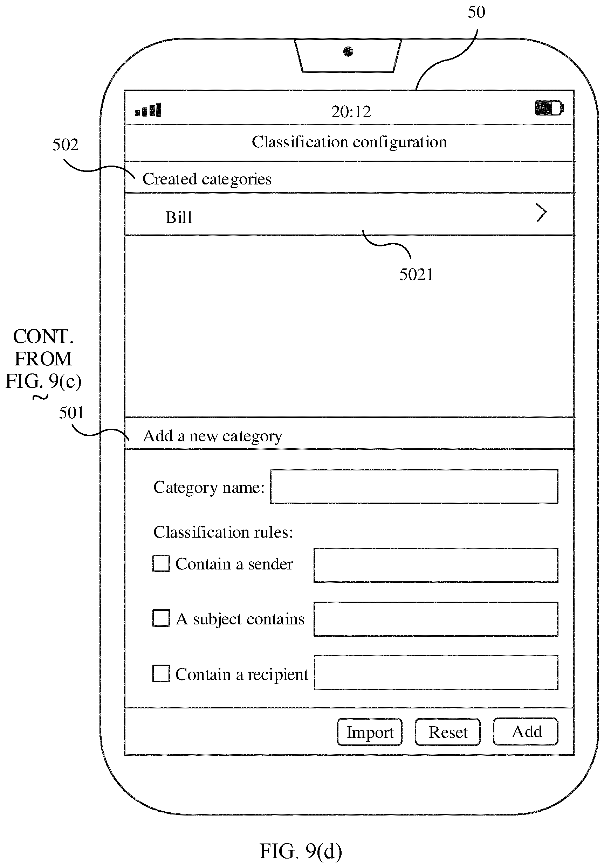

In addition, as shown in FIG. 9(c) and FIG. 9(d), after the user taps the "Class configuration" option 3041 again, in the classification configuration interface 50, the "Created category" bar 502 may display the created "Bill" class item 5021. The user may tap the "Bill" category item 5021, and open a corresponding configuration interface to modify a category name and a classification rule of the "Bill" category. Content in the configuration interface is similar to that of "Add a new category" bar 501, and details are not described herein again.

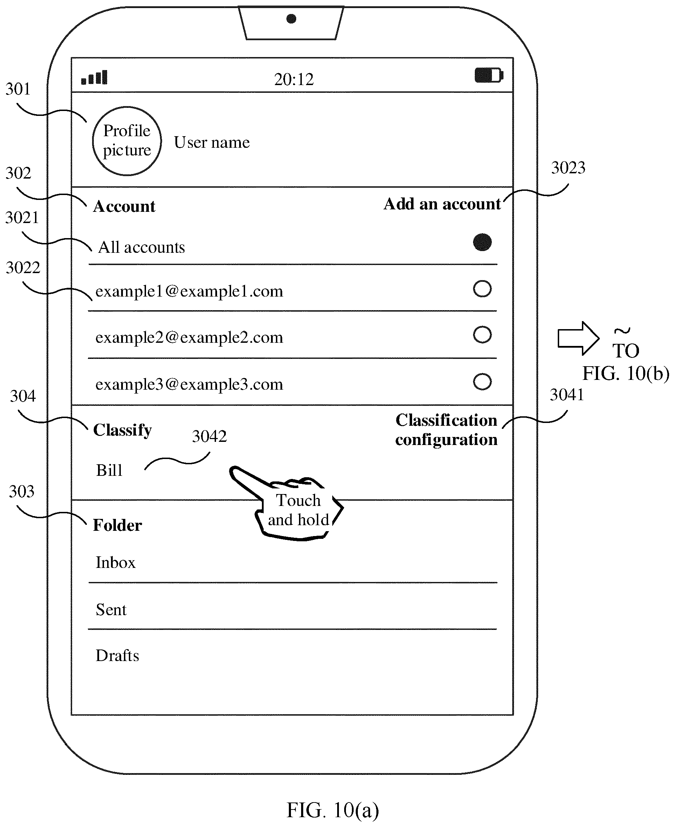

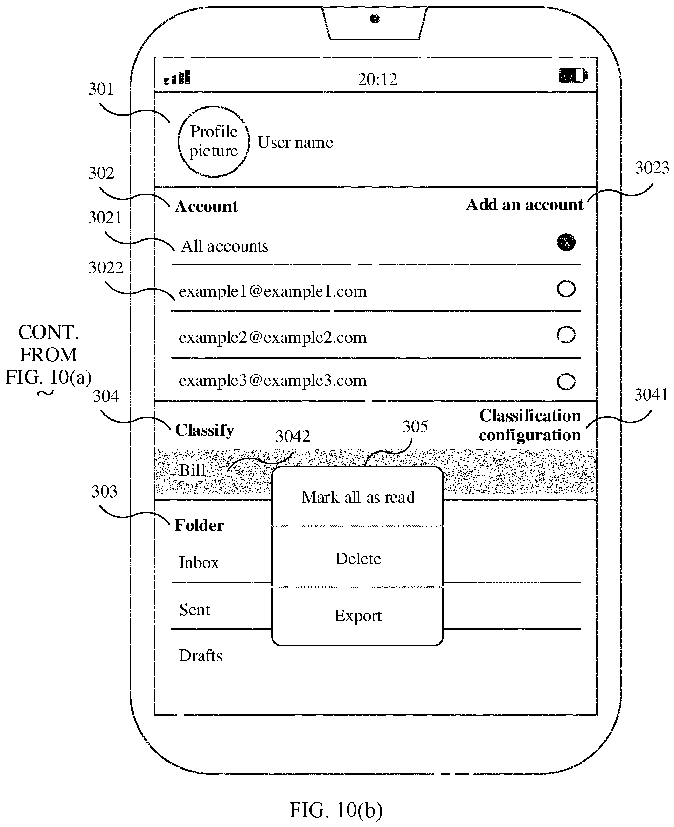

For the created classification category, as shown in FIG. 10(a) and FIG. 10(b), after the user touches and holds the bill category folder 3042 in the classification bar 304, the mailbox app may display an operation menu 305 corresponding to the folder. For example, the operation menu 305 may include the following operation instructions: "Mark all mails as read", "Delete", "Export", and the like, where the user may mark all mails in the bill category folder 3042 as read by using the instruction of "Mark all mails as read", delete the bill category folder 3042 (that is, delete the "Bill" category) by using the "Delete" instruction, and export the classification category file corresponding to the "Bill" category by using the "Export" instruction.

Step S102: The mailbox app classifies mails of all added mailbox accounts according to a classification rule of the target classification category.

After the user successfully adds the target classification category, the mailbox app may save classification configuration information of the classification category, and may traverse all added mailbox accounts, and scan and classify mails of each mailbox account that are pulled.

Specifically, after scanning a mail, the mailbox app may match the mail with a classification rule of the target classification category. If the mail matches the classification rule, the mail may be classified into the target classification category.

For example, for the foregoing "Bill" category, a classification rule set by the user is "Contain a sender: bank1@bank1.com, bank2@bank2.com, or bank3@bank3.com"; and if a sender of the scanned mail is "bank1@bank1.com", "bank2@bank2.com", or "bank3@bank3.com", it is considered that the mail matches the classification rule.

For a matched mail, the mailbox app may record a category name of a classification category to which the mail belongs, a mailbox account to which the mail belongs, and a mailbox and a uid of the mail into a classification table.

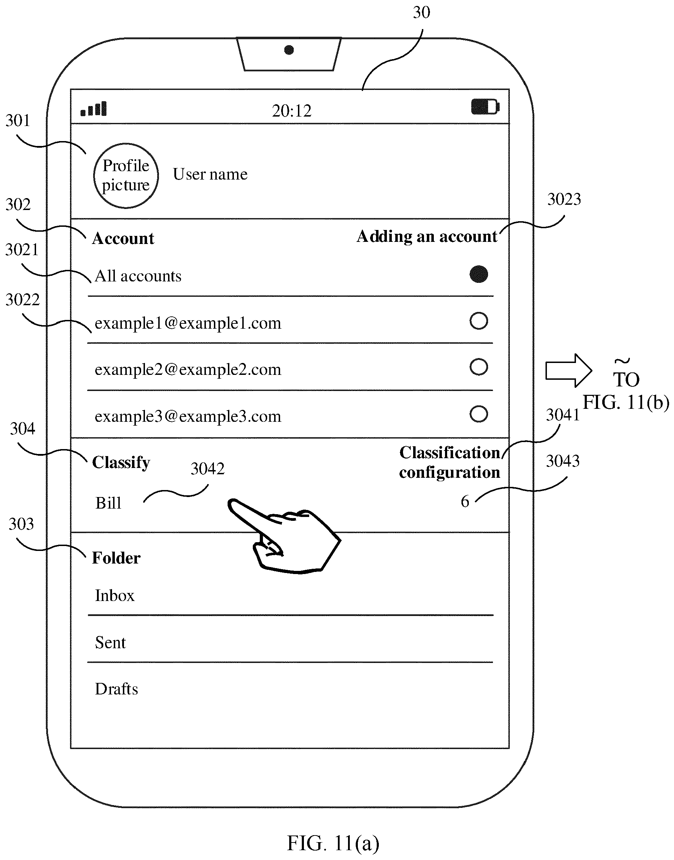

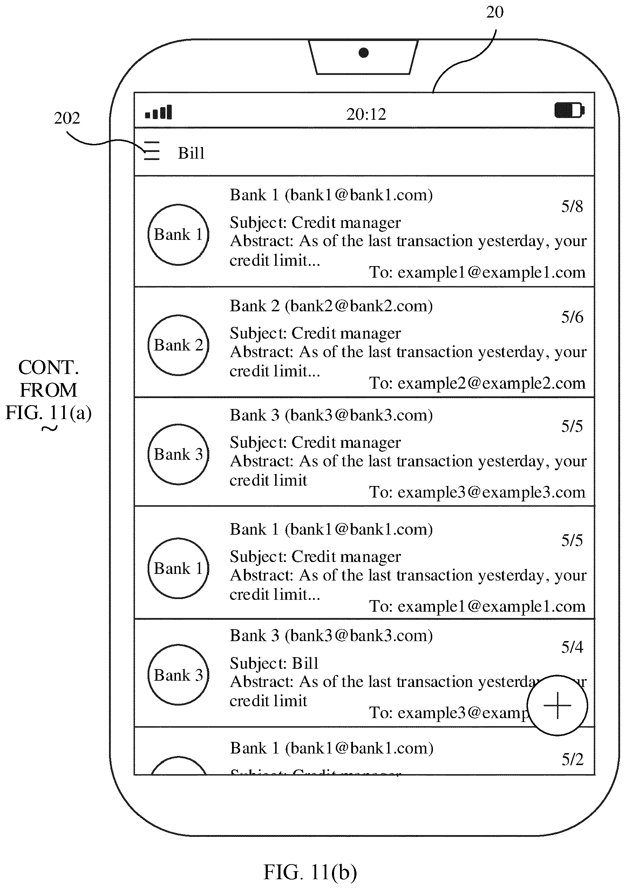

After classification of the target classification category is completed, as shown in FIG. 11(a) and FIG. 11(b), after the user taps the bill category folder 3042, the mailbox app may display a mail list under the "Bill" category.

In some embodiments, after the user taps the "Bill" category, a displayed mail list may be fixedly set to display classified mails corresponding to all mailbox accounts added by the user.

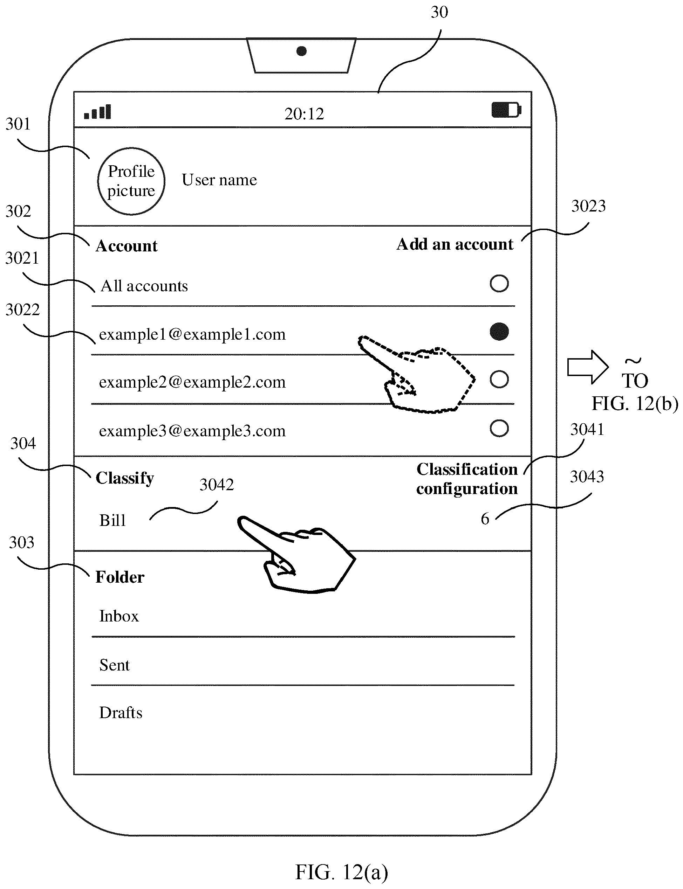

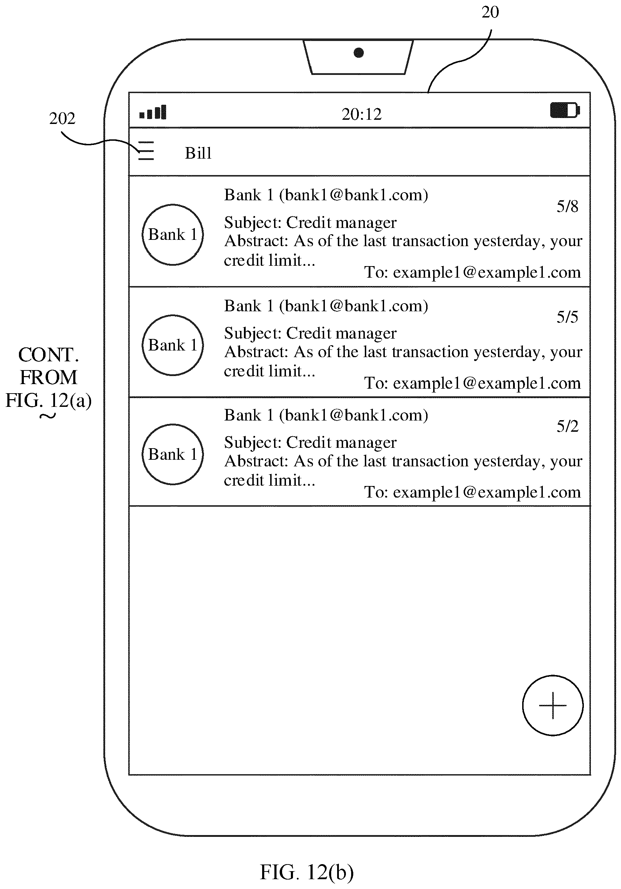

In some embodiments, after the user taps the "Bill" category, a displayed mail list may be determined based on an account option selected by the user in the mailbox account bar 302. When the user selects the account option 3022 corresponding to a specific mailbox account, for example, as shown in FIG. 11(a) and FIG. 11(b), the user selects the "All accounts" option 3021, and after the user taps the bill category folder 3042, the electronic device may display, on the main user interface 20, classified mails corresponding to all mailbox accounts added by the user. As shown in FIG. 12(a), when the user selects the account option 3022 corresponding to "example1@example1.com", and taps the bill category folder 3042, as shown in FIG. 12(b), the electronic device may display, on the main user interface 20, classified mails corresponding to the mailbox account "example1@example1.com".

As shown in FIG. 11(a), the mailbox app may display mail status statistical information 3043 of the target classification category in the classification bar 304, where the mail status statistical information 3043 may include a total quantity of mails, a quantity of unread mails, and/or a quantity of read mails. Herein, for example, the mailbox app displays, in the classification bar 304 in a display area in which the bill category folder 3042 is located, that a quantity of unread mails of the "Bill" category is six.

For each classification category created by the user, after classification is performed on the classification category for the first time, subsequently, the mailbox app may match a pulled mail with a classification rule of each classification category each time after pulling the mail, and classify the mail into a classification category corresponding to the matched classification rule. A same mail may be classified into one or more classification categories. Creation, classification, and synchronization processes of each classification category are similar. The target classification category in this embodiment of this application may be any classification category created by the user. For ease of description, the following continues to use an example in which the target classification category is the "Bill" category for description.

Step S103: The mailbox app requests, according to the IMAP protocol, an ISP server corresponding to a classified mail, and creates a target folder (with the same name as the category name of the target classification category) under a mailbox account corresponding to the classified mail.

For the created "Bill" category, the mailbox app can synchronize classification data to the ISP server so that the user can view the classification data on another mailbox client.

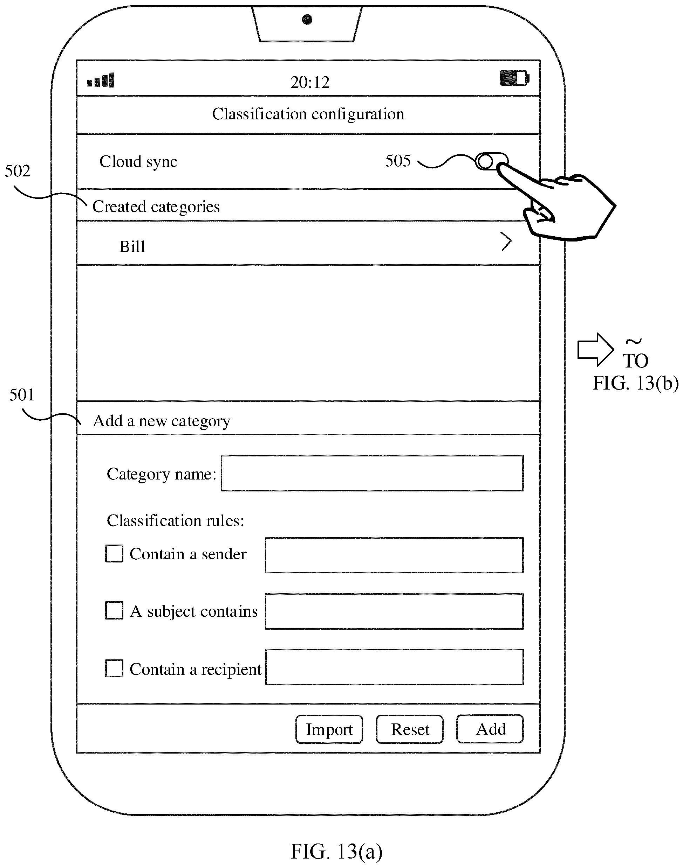

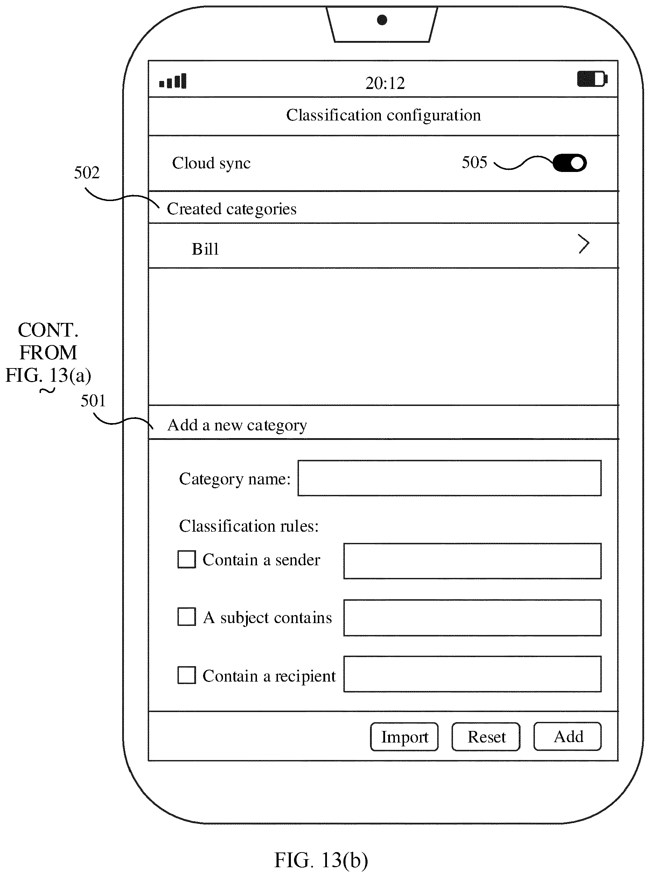

To improve flexibility, as shown in FIG. 13(a), a switch option 505 corresponding to cloud synchronization may be added in the classification configuration interface 50. The user may tap the option to select to enable or disable a cloud synchronization function. Herein, for example, the cloud synchronization function is in a disabled state. After the user taps the switch option 505, as shown in FIG. 13(b), the cloud synchronization function is enabled.

When the cloud synchronization function is disabled, the mailbox app does not synchronize classification data of a mail after classifying the pulled mail. When the cloud synchronization function is enabled, after classifying the pulled mail, the mailbox app synchronizes the classification data of the mail to the ISP server if the pulled mail matches a classification rule of the "Bill" category.

Specifically, during synchronization, each time a mail is scanned and the mail matches a classification rule of th "Bill" category, the mailbox app may synchronize classification data corresponding to the mail to a corresponding ISP server; or may synchronize classification data of classified mails of a specific mailbox account to a corresponding ISP server in sequence after all mails of the mailbox account are scanned; or may synchronize classification data of classified mails to a corresponding ISP server in sequence for each mailbox account after all mails are scanned.

For example, mailbox accounts added to the mailbox app include example1@example1.com, example2@example2.com, and example3@example3.com. After the user creates the "Bill" category, the mailbox app starts to traverse mails of each mailbox account for classification and synchronization. It is assumed that a currently traversed mailbox account is "example1@example1.com". In a process in which a mail of the mailbox account is scanned, when a scanned mail does not match a classification rule of the "Bill" category, the mailbox app can continue to scan a next mail; and when a scanned mail matches a classification rule of the "Bill" category, the mailbox app can classify the mail into the "Bill" category and synchronize corresponding classification data to an ISP server whose domain name is "example1.com", and then scan a next mail. Alternatively, after scanning each mail of the mailbox account "example1@example1.com", the mailbox app may synchronize classification data corresponding to a mail that matches a classification rule of the "Bill" category to the ISP server whose domain name is "example1.com" in sequence, and then scan a next mailbox account. Alternatively, after mails of the three mailbox accounts are scanned, for each mailbox account, classification data corresponding to a mail that matches a classification rule of the "Bill" category may be synchronized to a corresponding ISP server in sequence. Data synchronization processes of the three mailbox accounts may be performed synchronously or sequentially. For each mailbox account, classification data of one or more mails may be synchronized each time. For ease of description, the following uses synchronization of one mail each time as an example for description.

During specific implementation, for each mailbox account involved in classified mails in the "Bill" category, when classification data of the "Bill" category is synchronized to an ISP server corresponding to the mailbox account for the first time, a folder with the same name as the category name of the "Bill" category (a folder with the same name for short, namely, a target folder) may be created under the mailbox account, and then classified mails belonging to the mailbox account in the "Bill" category are added (which may be moved or copied) to the folder with the same name.

For example, after the user creates the "Bill" category, three mails in mails of the mailbox account "example1@example1.com" pulled by the mailbox app can be classified into the "Bill" category. When the mailbox app synchronizes a first mail, the mailbox app can request the ISP server whose domain name is "example1.com" and create a folder named "Bill" under the mailbox account "example1@example1.com", and then request the ISP server to add the three mails to the folder with the same name.

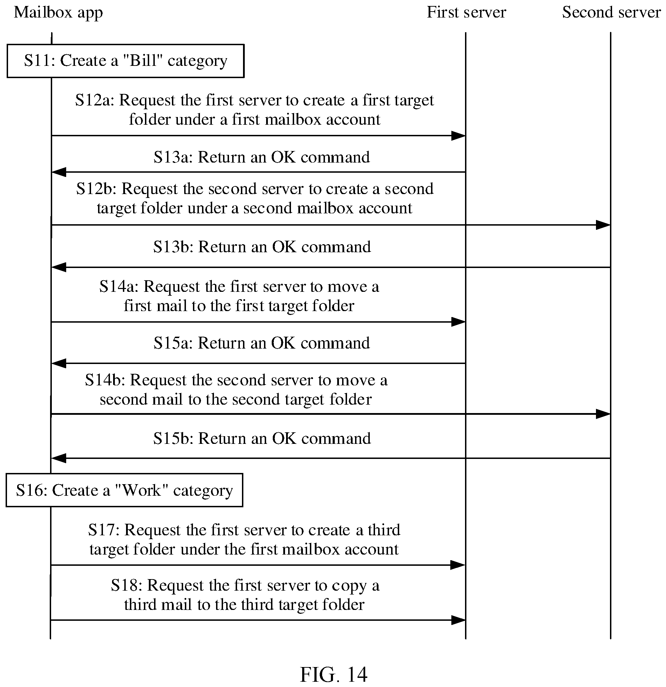

It is assumed that three mailbox accounts are added to the mailbox app: example1@example1.com (a first mailbox account), example2@example2.com (a second mailbox account), and example3@example3.com (a third mailbox account), where both the first mailbox account and the second mailbox account have mails that can be classified into the "Bill" category created by the user, and the third mailbox account has no mail that can be classified into the "Bill" category created by the user, the mailbox app separately requests ISP servers corresponding to the first mailbox account and the second mailbox account to create target folders. Specifically, as shown in FIG. 14, after the user creates the "Bill" category on the mailbox app (step S11), the mailbox app requests the first server to create a first target folder under the first mailbox account (step S12a), and requests the second server to create a second target folder under the second mailbox account (step S12b), where both the first target folder and the second target folder have a same category name as the target classification category. There is no strict time sequence execution relationship between a classification data synchronization process of the first mailbox account and a classification data synchronization process of the second mailbox account, that is, step S12a and step S12b may be performed successively, or may be performed simultaneously, and subsequent steps are similar.

After creating a folder with the same name under a mailbox account, the mailbox app may mark the folder by using a flag bit or the like. When synchronizing classification data subsequently, the mailbox app may determine whether a folder with the same name has been created by using the flag bit. If the folder has been created, the mailbox app does not need to create the folder again, and may directly perform a moving or copying process.

When synchronizing the classification data, the mailbox app can invoke a standard IMAP protocol interface to create a folder, move a mail, and copy a mail according to the IMAP protocol.

When creating a folder, the mailbox app may request, by sending a CREATE command to an ISP server corresponding to a mailbox account, the ISP server to create a target folder. The following shows a command execution instance:
k LIST "" "*" //The mailbox app runs a LIST command to view all folders under the current account on the ISP server
   * LIST (\HasNoChildren \Trash) "." Trash
   * LIST (\HasNoChildren) "." folder1
   * LIST (\HasNoChildren) "." INBOX
k OK List completed (0.001+0.000 secs) .//The ISP server returns all folders of the current account to the mailbox app
c CREATE bill //Create a folder named bill on the ISP server
c OK Create completed (0.002+0.000+0.001 secs). //The ISP server returns a creation result to the mailbox app
k2 LIST "" "*"//The mailbox app runs the LIST command to view all folders under the current account on the ISP server again
   * LIST (\HasNoChildren \Trash) "." Trash
   * LIST (\HasNoChildren) "." folder1
   * LIST (\HasNoChildren) "." bill
   * LIST (\HasNoChildren) "." INBOX
k2 OK List completed (0.001+0.000 secs).//The ISP server returns all folders of the current account to the mailbox app, and all folders include the newly created bill folder.

As shown above, the mailbox app sends the CREATE command to the ISP server to create the bill folder (namely, a bill folder). Before the creation, the mailbox app can run the LIST command to view the three folders under the mailbox account: Trash, folder1, and INBOX. After the creation, the mailbox app can run the LIST command to view the bill folder under the mailbox account.

Step S104: After successfully creating the folder, the ISP server returns a creation success response message.

As shown in the preceding example, after the folder is successfully created, the ISP server returns an OK command (a response message indicating that creation succeeds) to notify the mailbox app that the folder is successfully created.

For example, as shown in FIG. 14, both the first server and the second server return the OK command (step S13a and step S13b).

It may be understood that, due to reasons such as duplicate folder names and timeout, the folder may fail to be created. In this case, the ISP server may alternatively return a NO command (a response message indicating that creation fails) to notify the mailbox app that the folder fails to be created, and the mailbox app may subsequently initiate a request again.

Step S105: After receiving the creation success response message, the mailbox app requests, according to the IMAP protocol, the ISP server corresponding to the classified mail, to move or copy the classified mail to the target folder.

After receiving the response message indicating that creation succeeds, the mailbox app may send a COPY or MOVE command to the ISP server corresponding to the classified mail, to request the ISP server to move or copy the classified mail to the target folder.

In some embodiments, the classified mail may be added to the target folder by moving. In this case, the classified mail is removed from a folder (for example, an inbox) in which the classified mail is located before classification.

In some embodiments, the classified mail may alternatively be added to the target folder by copying. In this case, the classified mail can still be found in a folder (for example, an inbox) in which the classified mail is located before classification.

In some embodiments, some classified mails may be added to the target folder by copying, and some classified mails may be added to the target folder by moving.

A manner of adding a classified mail to the target folder of the ISP server is the same as a manner of adding the classified mail to a classification folder of the mailbox app, that is, in the mailbox app, if the classified mail is moved to the classification folder (for example, a "Bill" folder), correspondingly, in the ISP server, the classified mail is moved to the target folder; and in the mailbox app, if the classified mail is copied to the classification folder (for example, a "Bill" folder), correspondingly, in the ISP server, the classified mail is copied to the target folder.

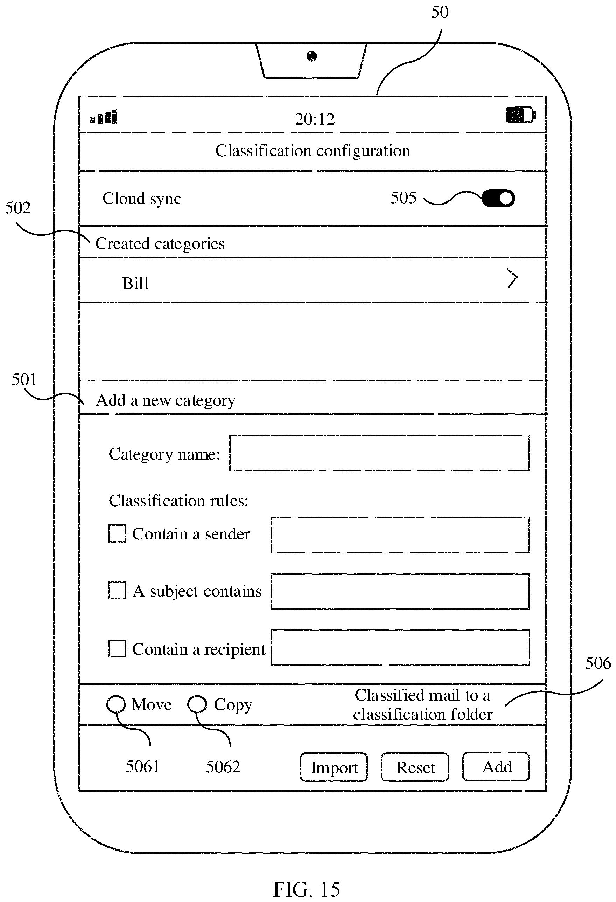

In some embodiments, a related option may be provided for the user to select a manner of adding the classified mail. For example, as shown in FIG. 15, an option 506 may be provided on the classification configuration interface 50. The user may select a single option control 5061 in the option to determine to move the classified mail to the classification folder and the target folder. The user may select a single option control 5062 in the option to determine to copy the classified mail to the classification folder and the target folder. The option 506 may alternatively be used as an optional option, that is, the user may not select the option. The mailbox app may add the classified mail in a default manner. For example, the copying manner is used by default.

For example, the user first creates the "Bill" category, and when creating the "Bill" category, selects the single option control 5061, to move a classified mail of the "Bill" category to the corresponding classification folder and the target folder; and then creates a "Work" category (step S16), and when creating the "Work" category, selects the single option control 5062, to copy a classified mail of the "Bill" category to the corresponding classified folder and the target folder.

For the "Bill" category, as described above, it is assumed that both the first mailbox account and the second mailbox account have mails that can be classified into the "Bill" category created by the user, and the third mailbox account has no mail that can be classified into the "Bill" category created by the user. For the "Work" category, it is assumed that the first mailbox account has a mail that can be classified into the "Work" category created by the user, and neither the second mailbox account nor the third mailbox account has a mail that can be classified into the "Work" category created by the user. For ease of description, in the following, a mail classified into the "Bill" category under the first mailbox account is referred to as a first mail, a mail classified into the "Bill" category under the second mailbox account is referred to as a second mail, and a mail classified into the "Work" category under the first mailbox account is referred to as a third mail.

As shown in FIG. 14, for the "Bill" category, after creating the first target folder on the first server and creating the second target folder on the second server, the mailbox app requests the first server to move the first mail to the first target folder (step S14a), and requests the second server to move the second mail to the second target folder (step S14b). For the "Work" category, after requesting the first server to create the third target folder under the first mailbox account (step S17), the mailbox app requests the first server to copy the third mail to the third target folder (step S18). For brevity, a process in which the first server returns a response message is omitted herein.

The following is an example of copying a mail (the mailbox is inbox, and the uid is 10) to the bill folder. A corresponding command execution instance is as follows:
001 select inbox //Select the inbox folder (that is, mailbox="inbox").
   ... //Response information returned by the ISP server, which is omitted here
001 OK [READ-WRITE] Select completed (0.003+0.000+0.002 secs). //The ISP server returns a selection result
c1 COPY 10 "bill" //Copy a mail whose UID is 10 to the bill folder
c1 OK Copy completed (0.007+0.000+0.006 secs). //The ISP server returns a copy result.

That is, when a mail is copied, "select mailbox 1 " may be executed first to determine a folder on which an operation is performed, and then "copy uid mailbox2" is executed to determine that a mail corresponding to the uid in a mailbox1 folder is copied to a mailbox2 folder.

A process of moving a mail is similar to that of copying a mail. A copy command can be replaced with a move command. That is, when a mail is moved, the "select mailbox1 command" need to be executed to determine a folder to be operated, and then the "move uid mailbox2 command" is executed to move the mail corresponding to the uid in the mailbox1 folder to the mailbox2 folder.

Step S106: The ISP server returns a response message.

As shown in the foregoing example, after the mail is moved or copied successfully, the ISP server may return an OK command (a response message indicating that the operation succeeds) to notify the mailbox app that the mail is moved or copied successfully. When the mail fails to be moved or copied, the ISP server may alternatively return a NO command (a response message indicating that the operation fails) to notify the mailbox app that the mail fails to be moved or copied, and the mailbox app may re-initiate a request subsequently.

For example, as shown in FIG. 14, both the first server and the second server return an OK command (step S15a and step S15b). It may be understood that, when a mailbox account includes a plurality of classified mails, the mailbox app may send a request to an ISP server corresponding to the mailbox account for a plurality of times, to move or copy each classified mail to a target folder. Correspondingly, the ISP server may return a response message for each request.

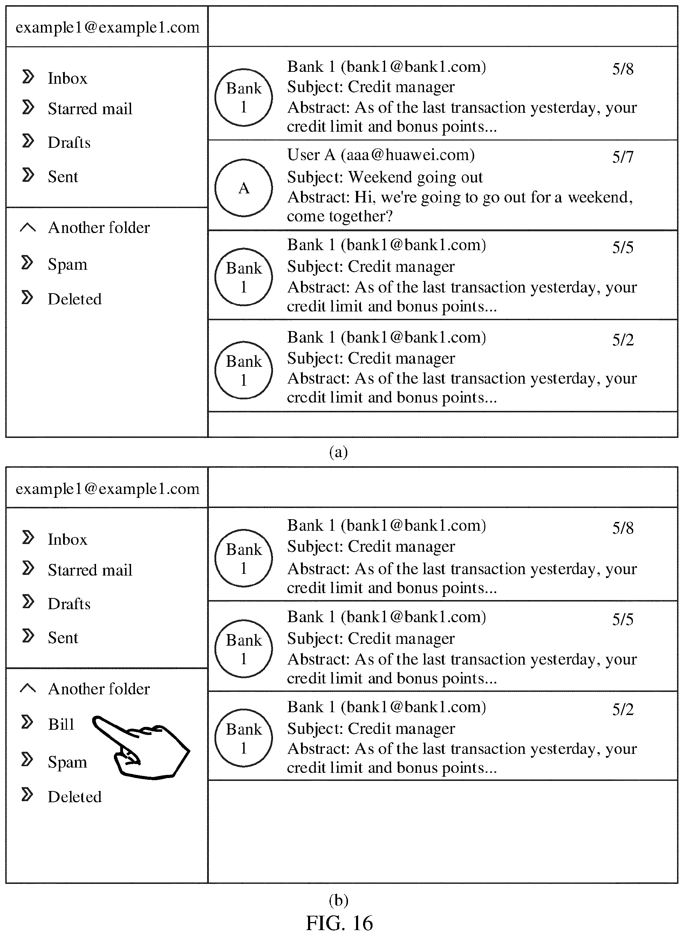

FIG. 16 is a schematic diagram of comparison between user interfaces displayed by the ISP client after the mailbox account "example1@example1.com" is logged in to on the ISP client before and after classification synchronization. As shown in (a) in FIG. 16, before the "Bill" category is created, the user logs in to the mailbox account "example1@example1.com" on the ISP client, where "Other folders" include a "Spam" folder and a "Deleted" folder; and the inbox includes four mails, where three mails are sent by a bank 1 (bank1@bank1.com), and one mail is sent by a user A (aaa@huawei.com). After the "Bill" category is created, a mail whose sender is "bank1@bank1.com" is classified into the "Bill" category. That is, the three mails sent by the bank 1 are classified into the "Bill" category. As shown in (b) in FIG. 16, after the user logs in to the mailbox account "example1@example1.com" on the ISP client, a new "Bill" folder is added in "Other folders"; and after the user taps the "Bill" folder, a mail list of the folder displayed on the ISP client includes the three mails sent by the bank 1 in the inbox.

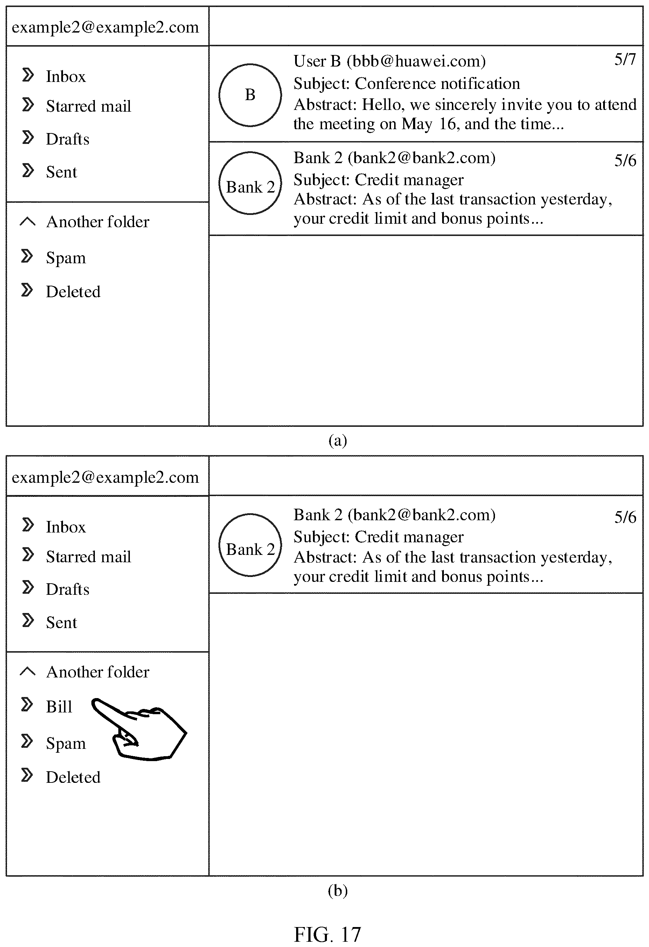

FIG. 17 is a schematic diagram of comparison between user interfaces displayed by the ISP client after the mailbox account "example2@example2.com" is logged in to on the ISP client before and after classification synchronization. As shown in (a) in FIG. 17, before the "Bill" category is created, the user logs in to the mailbox account "example2@example2.com" on the ISP client, and "Other folders" include a "Spam" folder and a "Deleted" folder; and the inbox includes two mails, where one mail is sent by the bank 2 (bank2@bank2.com), and the other mail is sent by a user B (bbb@huawei.com). After the "Bill" category is created, the mail whose sender is "bank2@bank2.com" is classified into the "Bill" category, that is, the mail sent by the bank 2 is classified into the "Bill" category. As shown in (b) in FIG. 17, after the user logs in to the mailbox account "example2@example2.com" on the ISP client, a new "Bill" folder is added to "Other folders"; after the user taps the "Bill" folder, a mail list of the folder displayed on the ISP client includes one mail sent by the bank 2 in the inbox.

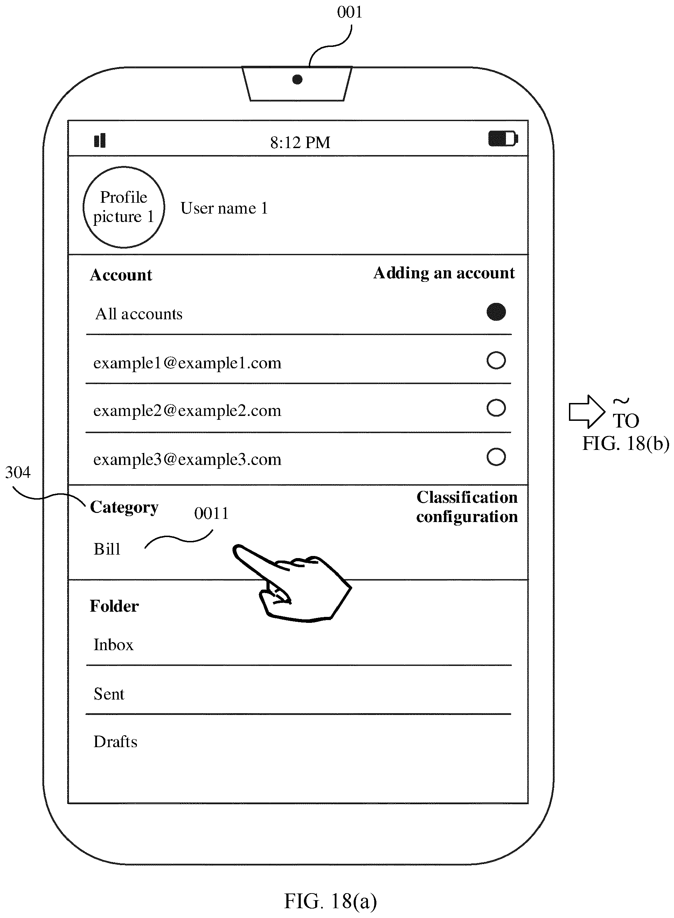

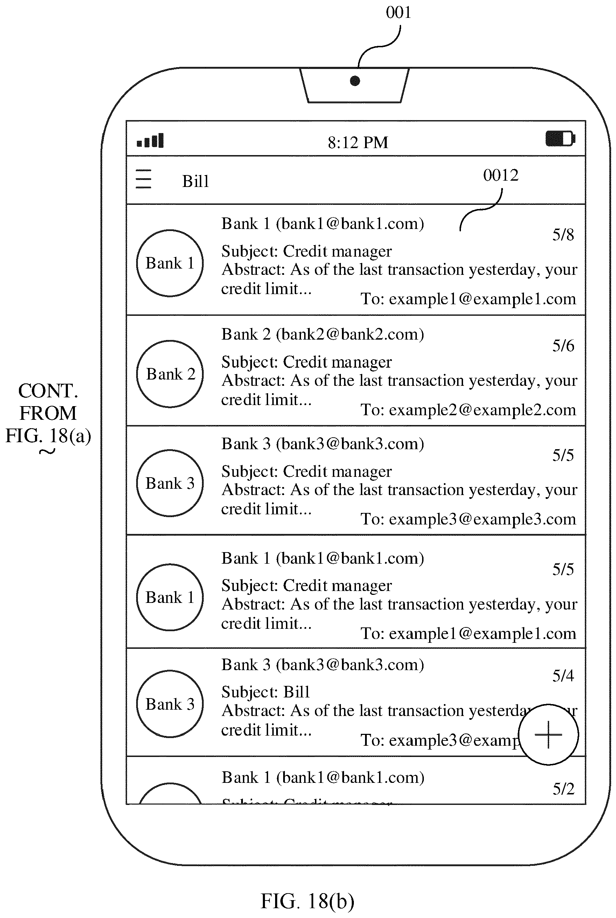

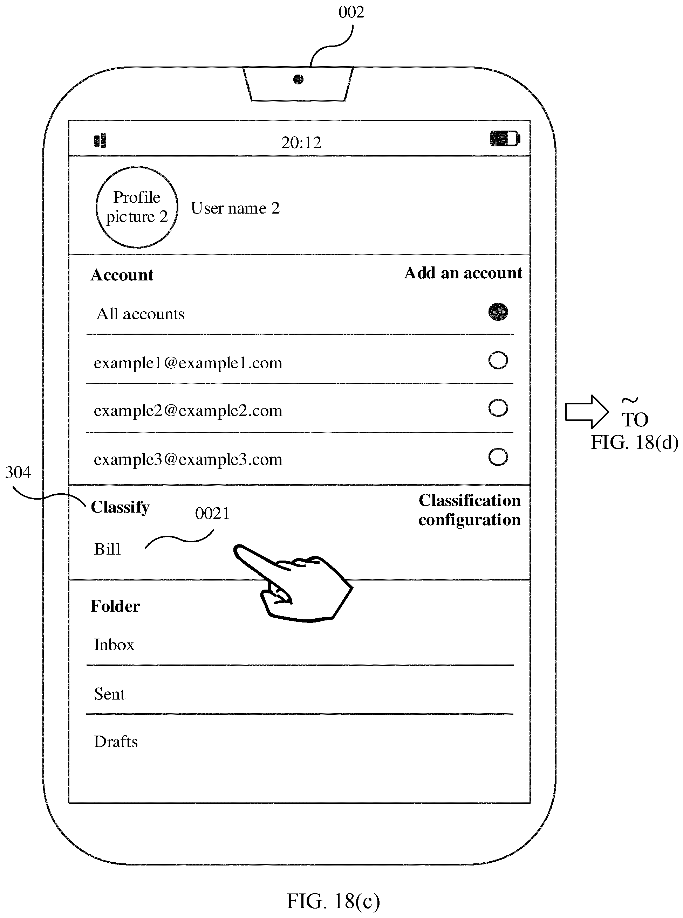

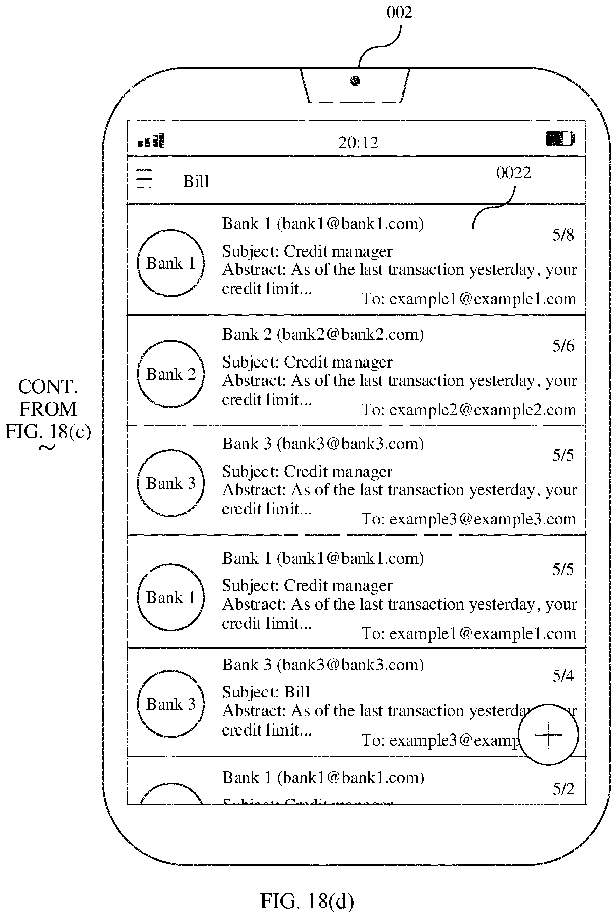

FIG. 18(a) to FIG. 18(d) are a schematic diagram of comparison between user interfaces of a mailbox app before and after a user switches an electronic device to log in to the mailbox app after classification synchronization. The user logs in to an application account 1 in a mailbox app installed on an electronic device 001, and adds mailbox accounts: example1@example1.com, example2@example2.com, and example3@example3.com. The user logs in to an application account 2 in a mailbox app installed on an electronic device 002, and also adds the mailbox accounts: example1@example1.com, example2@example2.com, and example3@example3.com. As shown in FIG. 18(a), the user creates a "Bill" category in the mailbox app installed on the electronic device 001, and the bill category folder 0011 is displayed in a classification bar 304. After the user taps the bill category folder 0011, as shown in FIG. 18(b), the mailbox app displays a mail list 0012 under the "Bill" category. As shown in FIG. 18(c), after the user adds the foregoing three mailbox accounts to the mailbox app installed on the electronic device 002, a bill category folder 0021 may be displayed in a classification bar 304. After the user taps the bill category folder 0021, as shown in FIG. 18(d), the mailbox app displays a mail list 0022 under the "Bill" category, and the list is consistent with the mail list 0012 on the electronic device 001.

In the mail management method shown in FIG. 4, the communication protocol between the mailbox app and the ISP server is described by using the IMAP standard protocol as an example. For some ISP servers, in addition to the IMAP standard protocol, other types of open protocols, such as the HTTP protocol, are also supported. For such an ISP server, the mailbox app may invoke an open protocol interface to communicate with the ISP server, to implement synchronization of classified data. The following describes the process.

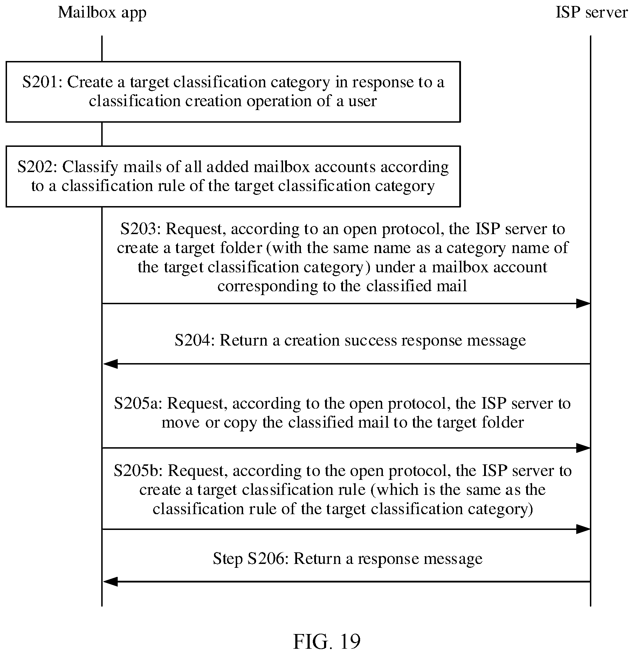

FIG. 19 is a schematic flowchart of another mail management method. As shown in FIG. 19, the method may include the following steps:
Step S201: A mailbox app creates a target classification category in response to a classification creation operation of a user.

For this step, refer to the description of the corresponding step S 101 in the embodiment shown in FIG. 4. Details are not described herein again.

Step S202: The mailbox app classifies mails of all added mailbox accounts according to a classification rule of the target classification category.

For this step, refer to the description of the corresponding step S 102 in the embodiment shown in FIG. 4. Details are not described herein again.

Step S203: The mailbox app requests, according to an open protocol, an ISP server corresponding to a classified mail, and creates a target folder (with the same name as a category name of the target classification category) under a mailbox account corresponding to the classified mail.

This step is similar to step S103 in FIG. 4, and a main difference lies in that an interface invoked when the mailbox app accesses the ISP server is different. The following uses an HTTP-based representational state transfer (representational state transfer, REST) application programming interface (application programming interface, API) as an example to illustrate an interaction instance.

A request initiated by the mailbox app:

```
          POST https://example.com/v1.0/me/mailFolders
          Content-type: application/json
          {
            "displayName": "bill"
          } //The mailbox app sends a request to the ISP server to create a folder named bill
```

A response received by the mailbox app:

```
          HTTP/1.1 201 Created //This indicates that creation on the ISP server succeeds
          Content-type: application/json
          {
            "displayName": " bill",
            "unreadItemCount": 0,
            "totalItemCount": 0,
            "id": "AAA1BBB2CCC3"
          } //Information that is about the bill folder and that is returned by the ISP server
```

As shown above, the mailbox app uses a POST method to request the ISP server to create a mailfolder object: a bill folder (namely, the bill folder). After creation succeeds, the ISP server returns information such as an id of the created bill folder.

Step S204: After successfully creating the folder, the ISP server returns a creation success response message.

As shown in the preceding example, after the folder is successfully created, the ISP server returns status code 201 (a response message indicating that creation succeeds) to notify the mailbox app that the folder is successfully created.

Similarly, when the folder fails to be created, the ISP server may alternatively return an error code (a response message indicating that creation fails) to notify the mailbox app that the folder fails to be created, and the mailbox app may subsequently initiate a request again.

After the target folder is created successfully, the mailbox app may perform a synchronization process of a classified mail. Some ISP servers provide open interfaces for adding, deleting, or querying a mail classification rule, and some ISP servers do not provide similar open interfaces. When the ISP server does not provide an open interface for adding, deleting, or querying a mail classification rule, and when the ISP server provides an open interface for adding, deleting, or querying a mail classification rule, but a rule for creating a mail classification rule provided by the ISP server is different from that provided by the mailbox app, the following step S205a may be performed to perform a synchronization process of a classified mail. When the ISP server provides an open interface for adding, deleting, or querying a mail classification rule, and a rule for creating a mail classification rule provided by the ISP server is the same as that provided by the mailbox app, the following step S205b may be performed to perform a synchronization process of a classified mail.

Step S205a: The mailbox app requests, according to the open protocol, the ISP server corresponding to the classified mail, to move or copy the classified mail to the target folder.

Specifically, this process is similar to step S105, and a main difference lies in that an interface invoked when the mailbox app accesses the ISP server is different. The following continues to use a REST API as an example to illustrate a corresponding interaction instance of copying a mail (id is "aabbcc") to the bill folder.

A request initiated by the mailbox app:

```
          POST https://example.com/v1.0/me/messages/aabbcc/copy
    Content-type: application/json
    {//id of a mailbox folder to which the mailbox app sends a message to the ISP server
o request copy
```

```
     "destinationId": "AAA1BBB2CCC3"
    }
```

A response received by the mailbox app:

```
  HTTP/1.1 200 OK //The ISP server returns a response result indicating that execution
 succeeds
```

As shown above, the mailbox app can invoke the POST method to perform the copy operation to request the ISP server to copy the mail whose ID is "aabbcc" to a mailbox folder whose ID is "AAA1BBB2CCC3" (the bill folder created in the preceding example). A process of moving a mail is similar to that of copying a mail. The copy operation can be changed to a move operation.

Step S205b: The mailbox app requests, according to the open protocol, the ISP server corresponding to the classified mail, and creates a target classification rule (which is the same as the classification rule of the target classification category).

If the ISP server provides an open interface for adding, deleting, or querying a mail classification rule, and a rule for creating a mail classification rule provided by the ISP server is the same as that provided by the mailbox app, the mailbox app can directly request the ISP server to create a mail classification rule that is the same as the classification rule of the target classification category. After creation is successful, the ISP server automatically scans all mails under a mailbox account for rule matching and classification.

It is assumed that creating a mail classification rule to move all mails from the sender bank1@bank1.com to the bill folder (id=AAA1BBB2CCC3) is wanted. A corresponding interaction process is as follows:

A request initiated by the mailbox app:

```
          POST https:// example.com/v1.0/me/mailFolders/inbox/messageRules
          Content-type: application/json
          { "displayName": "for mailbox bill",
              "sequence" :2,
              "conditions": {
                   "senderContains": [
                     "bank1@bank1.com" //Rule: A sender contains "bank1@bank1.com"
                   ]},
               "actions": {//An operation performed on a mail when the rule is met
                   "moveTo": [{"mailbox": {"id": "AAA1BBB2CCC3"}}]//Move the mail to
                   the folder with the id
          }}
```

A response received by the mailbox app:

```
          HTTP/1.1 201 Created //The ISP server returns a response result indicating that
 creation succeeds
          Content-type: application/json
          {
            "id":"AQAAAJ5dZqA=",
            "displayName":"for mailbox bill",
            "sequence" :2,
            "conditions": {
              "senderContains" : [
                "bank1@bank1.com"
              ]
            },
            "actions":{
                "moveTo":[{"mailbox":{"id":" AAA1BBB2CCC3"}}]
          }}
```

As shown above, the mailbox app can invoke the POST method to request the ISP server to create a messageRule object to create the target classification rule. After the target classification rule is successfully created, the ISP server may scan a mail, and move a mail matching the rule to the bill folder (namely, the target folder). Correspondingly, the mailbox app and the mailbox client may obtain folder information from the ISP server and display the folder information. For a specific display result, refer to FIG. 16 to FIG. 18(d).

Step S206: The ISP server returns a response message.

As shown in the example in step S205a, after the mail is moved or copied successfully, the ISP server may return a status code 200 (a response message indicating that the operation succeeds) to notify the mailbox app that the mail is moved or copied successfully. When the mail fails to be moved or copied, the ISP server may alternatively return an error code (a response message indicating that the operation fails) to notify the mailbox app that the mail fails to be moved or copied, and the mailbox app may re-initiate a request subsequently.

As shown in the example in step S205b, after the mail classification rule is successfully created, the ISP server may return a status code 201 (a response message indicating that creation succeeds) to notify the mailbox app that the mail classification rule is successfully created. When the mail classification rule fails to be created, the ISP server may alternatively return an error code (a response message indicating that creation fails) to notify the mailbox app that the mail classification rule fails to be created, and the mailbox app may re-initiate a request subsequently.

Generally, compared with a standard IMAP protocol interface, an open protocol interface provided by the ISP server has fewer resource overheads. Therefore, when the ISP server provides the open protocol interface, the mailbox app interacts with the ISP server through the open protocol interface. This can save resource overheads of the ISP server. In addition, when the ISP server provides the open interface for adding, deleting, or querying a mail classification rule, the interface is invoked to synchronize mail classification data, and it is unnecessary to invoke a moving or copying interface for each mail. This can further save overheads of a network, resources on a client side, and resources on a server side.

Persons skilled in the art may understand that the foregoing embodiments are examples, but are not intended to limit this application. In a possible case, an execution sequence of one or more steps in the foregoing steps may be adjusted, or may be selectively combined to obtain one or more other embodiments. Persons skilled in the art may select any combination of the foregoing steps based on a requirement, and any combination that does not depart from the essence of solutions of this application shall fall within the protection scope of this application.

According to the mail management solution provided in this embodiment, a user can uniformly classify mails of a plurality of mailbox accounts by using a mailbox client. This can improve convenience of searching for a mail by the user, and save time costs of managing a mail by the user. In addition, in this solution, the mailbox client may further synchronize classification data to each ISP server, so that the user can also view a classification result in another mailbox client. This can further improve convenience of use by the user and save time costs of managing a mail by the user.

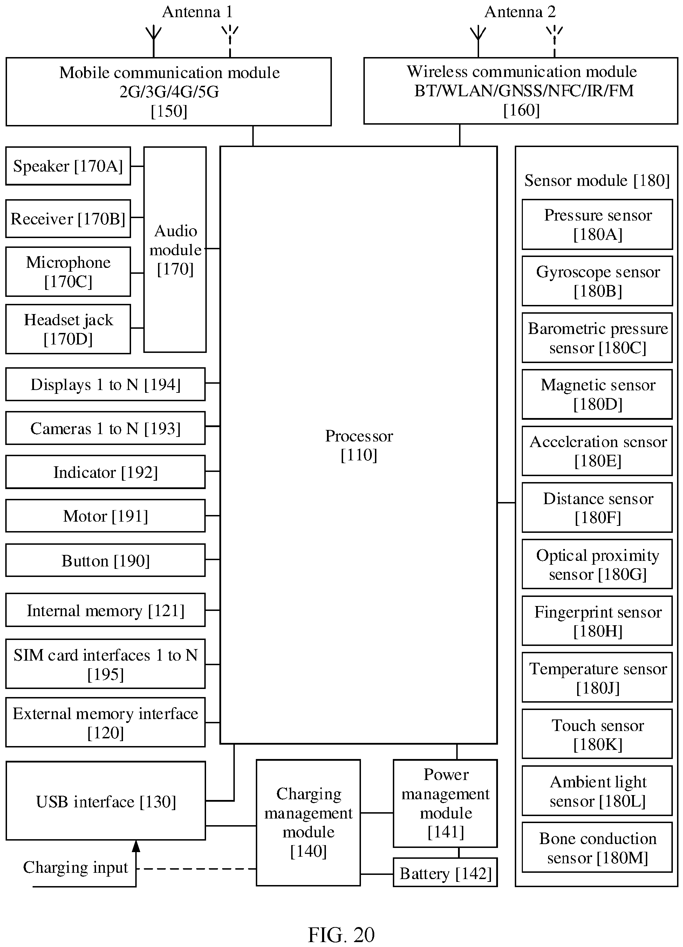

Based on a same concept, an embodiment of this application further provides an electronic device. Refer to FIG. 20. FIG. 20 is a schematic diagram of a structure of an electronic device according to an embodiment of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device. In some other embodiments of this application, the electronic device may include more or fewer components than those shown in the figure, or combine some components, or split some components, or perform a different component arrangement. Components shown in the figure may be implemented in hardware, software, or a combination thereof.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store an instruction or data that is just used or cyclically used by the processor 110. If the processor 110 needs to use the instructions or the data again, the processor may directly invoke the instructions or the data from the memory. This avoids repeated access, shortens waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, including a serial data line (serial data line, SDA) and a serial clock line (serial clock line, SCL). The I2S interface may be configured to perform audio communication. The PCM interface may further be configured to: perform audio communication, and sample, quantize, and encode an analog signal. The UART interface is a universal serial data bus, and is configured to perform asynchronous communication. The bus may be a two-way communication bus. The UART interface converts to-be-transmitted data between serial communication and parallel communication. The MIPI interface may be configured to connect the processor 110 to peripheral components such as the display 194 and the camera 193. The MIPI interface includes a camera serial interface (camera serial interface, CSI), a display serial interface (display serial interface, DSI), and the like. The GPIO interface may be configured by using software. The GPIO interface may be configured as a control signal or may be configured as a data signal. The USB interface 130 is an interface that conforms to a USB standard specification, and may be specifically a mini USB interface, a micro USB interface, a USB type-C interface, or the like. The USB interface 130 may be configured to connect to a charger to charge the electronic device, may be configured to transmit data between the electronic device and a peripheral device, or may be configured to connect to a headset and play audio through the headset. The interface may be further configured to connect to another electronic device such as an AR device.

It may be understood that, an interface connection relationship between the modules shown in embodiments of this application is only an example for description, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device. The charging management module 140 can supply power to the electronic device by using the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device may be configured to cover one or more communication frequency bands. Different antennas may be further reused, to improve antenna utilization. For example, the antenna 1 may be multiplexed as a diversity antenna of a wireless local area network. In some other embodiments, an antenna may be used in combination with a tuning switch.

The mobile communication module 150 may provide a solution to wireless communication such as 2G/3G/4G/5G applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some function modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in the same component as the mobile communication module 150 or another function module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device. The wireless communication module 160 may be one or more components integrating at least one communication processing module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), broadband code division multiple access (wideband code division multiple access, WCDMA), time-division code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a quantum dot light emitting diode (quantum dot light emitting diodes, QLED), or the like. In some embodiments, the electronic device may include one or N displays 194, where N is a positive integer greater than 1.

The electronic device may implement a photographing function by using the ISP, the camera 193, the video codec, the GPU, the display 194, the application processor, and the like.

The ISP may be configured to process data fed back by the camera 193. The camera 193 is configured to capture a static image or a video. The digital signal processor is configured to process a digital signal, and may process another digital signal in addition to the digital image signal. The video codec is configured to: compress or decompress a digital video.

The NPU is a neural-network (neural-network, NN) computing processor. The NPU quickly processes input information based on a structure of a biological neural network, for example, based on a transfer mode between human brain neurons; and may further continuously perform self-learning. Applications such as intelligent cognition of the electronic device may be implemented through the NPU, for example, image recognition, facial recognition, speech recognition, and text understanding.

The internal memory 121 may be configured to store computer-executable program code, and the executable program code includes instructions. The processor 110 runs the instructions stored in the internal memory 121, to perform various function applications and data processing of the electronic device. The internal memory 121 may include a program storage area and a data storage area. The program storage area may store an operating system, an application required by at least one function (for example, a sound playing function or an image playing function), and the like. The data storage area may store data (such as audio data and a phone book) created when the electronic device is used, and the like. In addition, the internal memory 121 may include a high speed random access memory, or may include a nonvolatile memory, for example, at least one magnetic disk storage device, a flash storage device, or a universal flash storage (universal flash storage, UFS).

The external memory interface 120 may be configured to be connected to an external memory, for example, a micro SD card, to extend a storage capability of the electronic device. An external storage card communicates with the processor 110 through the external memory interface 120, to implement a data storage function. For example, files such as music and a video are stored in the external storage card.

The electronic device may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The speaker 170A, also referred to as a "horn", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power-on button, a volume button, and the like. The button 190 may be a mechanical button, or may be a touch button. The electronic device may receive a button input, and generate a button signal input related to user settings and function control of the electronic device. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device. The electronic device may support one or N SIM card interfaces, where N is a positive integer greater than 1. The SIM card interface 195 can support a nano-SIM card, a micro-SIM card, a SIM card, and the like.

The electronic device provided in this embodiment can perform the foregoing method embodiment. An implementation principle and technical effects of the electronic device are similar. Details are not described herein again.

Based on a same concept, an embodiment of this application further provides a mail management apparatus. The apparatus embodiment corresponds to the foregoing method embodiments. For ease of reading, details in the foregoing method embodiments are not described one by one again in this apparatus embodiment. However, it should be understood that the apparatus in this embodiment can correspondingly implement all content in the foregoing method embodiments.

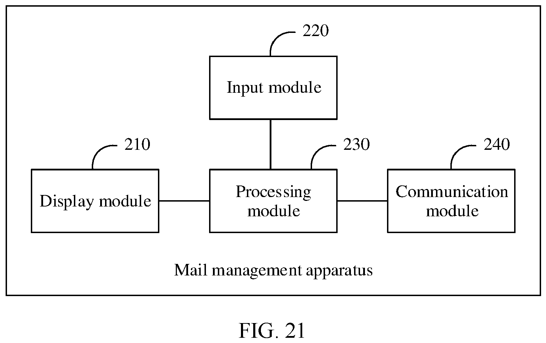

FIG. 21 is a schematic diagram of a structure of a mail management apparatus according to an embodiment of this application. As shown in FIG. 21, the apparatus provided in this embodiment includes:
a display module 210, an input module 220, a processing module 230, and a communication module 240.

The display module 210 is configured to support the electronic device in performing an interface display operation in the foregoing embodiment and/or another process of the technology described in this specification. The display module may be a touchscreen, or other hardware, or a combination of hardware and software.

The input module 220 is configured to receive input of a user on a display interface of the electronic device, for example, touch input, voice input, or gesture input. The input module is configured to support the electronic device in performing a step of receiving a user operation in the foregoing embodiment and/or another process of the technology described in this specification. The input module may be a touchscreen, other hardware, or a combination of hardware and software.

The processing module 230 is configured to support the electronic device in performing a processing operation in method steps in the foregoing embodiments, and/or another process of the technology described in this specification.

The communication module 240 is configured to support the electronic device in performing an operation related to a communication process between the electronic device and the ISP server in the foregoing embodiments, and/or another process of the technology described in this specification.

The apparatus provided in this embodiment can perform the foregoing method embodiments, and an implementation principle and a technical effect of the apparatus are similar to those of the foregoing method embodiments. Details are not described herein again.

It may be clearly understood by persons skilled in the art that, for convenient and brief description, division into the foregoing functional units and modules is merely used as an example for description. During actual application, the foregoing functions can be allocated to different functional units and modules for implementation based on a requirement, that is, an inner structure of the apparatus is divided into different functional units or modules to implement all or some of the functions described above. Function units and modules in embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units and modules are merely for ease of distinguishing between the function units and modules, but are not intended to limit the protection scope of this application. For a specific working process of the units or modules in the foregoing system, refer to a corresponding process in the foregoing method embodiments. Details are not described herein again.

An embodiment of this application further provides a computer-readable storage medium. The computer-readable storage medium stores a computer program, and when the computer program is executed by a processor, the method in the foregoing method embodiment is implemented.

An embodiment of this application further provides a computer program product. When the computer program product runs on an electronic device, the electronic device is enabled to perform the method in the foregoing method embodiments.

An embodiment of this application further provides a chip system, including a processor, where the processor is coupled to a memory, and the processor executes a computer program stored in the memory, to implement the method in the foregoing method embodiments. The chip system may be a single chip or a chip module including a plurality of chips.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Persons of ordinary skill in the art may understand that all or some of the procedures of the methods in embodiments may be implemented by a computer program instructing related hardware. The program may be stored in the computer-readable storage medium. When the program is executed, the procedures in the method embodiments may be included. The foregoing storage medium may include any medium that can store program code, such as a ROM, a random access memory RAM, a magnetic disk, or an optical disc.

Naming or numbering of steps in this application does not mean that the steps in the method procedures need to be performed in a time/logical order indicated by the naming or numbering. An execution order of the steps in the procedures that have been named or numbered can be changed based on a technical objective to be achieved, as long as same or similar technical effects can be achieved.

In the foregoing embodiments, descriptions of all embodiments have respective focuses. For a part that is not described in detail or recorded in an embodiment, refer to related descriptions in other embodiments.

In embodiments provided in this application, it should be understood that the disclosed apparatus/ device and method may be implemented in other manners. For example, the described apparatus/device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

It should be understood that in the descriptions of the specification and the appended claims of this application, the terms "include", "contain", "have", and any other variant thereof are intended to cover a non-exclusive inclusion, and all mean "include but not limited to", unless otherwise specially emphasized. For example, processes, methods, systems, products, or devices that include a series of steps or modules are not limited to the steps or the modules that are clearly listed, and may include other steps and modules that are not clearly listed or that are inherent to the processes, methods, products, or devices.

In descriptions of this application, "/" indicates an "or" relationship between associated objects unless otherwise specified. For example, A/B may indicate A or B. The term "and/or" in this application indicates an association relationship for describing associated objects and indicates that three relationships may exist. For example, A and/or B may indicate the following three cases: Only A exists, both A and B exist, and only B exists, where A and B may be singular or plural.

Moreover, in the descriptions of this application, unless otherwise specified, "a plurality of" means two or more than two. "At least one of the following" or a similar expression thereof means any combination of these items, including any combination of a single item or a plurality of items. For example, at least one of a, b, or c may represent a, b, c, a and b, a and c, b and c, or a and b and c. Herein, a, b, and c may be singular or plural.

As used in the specification and the appended claims of this application, according to the context, the term "if" may be interpreted as "when" or "once" or "in response to determining" or "in response to detecting". Likewise, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of the specification and the appended claims of this application, terms "first", "second", and the like are intended to distinguish between similar objects but do not necessarily indicate a specific order or sequence, and shall not be understood as an indication or implication of relative importance or an implicit indication of a quantity of indicated technical features. It should be understood that data termed in such a way are interchangeable in proper circumstances so that the embodiments described herein can be implemented in another order than the order illustrated or described herein; and a feature limited by "first" or "second" may explicitly or implicitly include at least one of the features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a relative concept in a specific manner.

Refer to "an embodiment", "some embodiments", or the like in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A mail management method, comprising:
displaying a first interface of a mailbox application, wherein a plurality of mailbox accounts are added to the mailbox application;
receiving a classification configuration operation, and obtaining a first classification rule corresponding to a first classification folder; and
after receiving the classification configuration operation, displaying a third interface, wherein the third interface comprises a mail list corresponding to the first classification folder, and the mail list corresponding to the first classification folder is obtained after mails of the plurality of mailbox accounts are classified according to the first classification rule.

2. The method according to claim 1, wherein the receiving a classification configuration operation, and obtaining a first classification rule corresponding to a first classification folder comprises:
receiving a trigger operation that is input for the first interface, and displaying a classification configuration interface;
receiving a configuration operation on the classification configuration interface, and obtaining the first classification rule corresponding to the first classification folder; and
receiving an addition confirmation operation, and displaying a second interface, wherein the second interface comprises the first classification folder.

3. The method according to claim 2, wherein the method further comprises:
when a classification folder fails to be added, displaying prompt information of the adding failure, wherein the prompt information of the adding failure comprises a reason for the adding failure.

4. The method according to claim 2 or 3, wherein the classification configuration interface comprises a plurality of classification rule configuration options, and the receiving a configuration operation on the classification configuration interface, and obtaining the first classification rule corresponding to the first classification folder comprises:
receiving an operation of entering a classification rule in at least one of the classification rule configuration options, and obtaining the first classification rule corresponding to the first classification folder.

5. The method according to any one of claims 1 to 4, wherein the first classification rule corresponding to the first classification folder is obtained by importing a target classification category file, and the target classification category file comprises the first classification rule.

6. The method according to any one of claims 1 to 5, wherein the method further comprises:
in response to the classification configuration operation, obtaining a first category name corresponding to the first classification folder, wherein the first category name is referred to as a folder name of the first classification folder.

7. The method according to any one of claims 1 to 6, wherein the method further comprises:
displaying mail status statistical information of the first classification folder, wherein the mail status statistical information comprises: a total quantity of mails, a quantity of unread mails, and/or a quantity of read mails.

8. The method according to any one of claims 1 to 7, wherein the method further comprises:
before displaying the third interface, receiving an operation of selecting a first mailbox account from the plurality of mailbox accounts, wherein
the mail list displayed on the third interface comprises a mail corresponding to the first mailbox account in the first classification folder.

9. The method according to any one of claims 1 to 8, wherein the plurality of mailbox accounts comprise the first mailbox account, the first classification folder comprises a first mail set, and the first mail set is a mail set that classifies mails in the first mailbox account into the first classification folder according to the first classification rule; and
the method further comprises: sending a first request to a first server corresponding to the first mailbox account, wherein the first request is used by the first server to classify mails in the first mail set into a first target folder under the first mailbox account, and the first target folder has a same name as the first classification folder.

10. The method according to claim 9, wherein the first request comprises a moving or copying instruction, and the first request is specifically used by the first server to move or copy the mails in the first mail set to the first target folder.

11. The method according to claim 9, wherein the first request comprises the first classification rule, and the first request is specifically used by the first server to classify the mails in the first mailbox account into the first target folder according to the first classification rule.

12. The method according to any one of claims 9 to 11, comprising: when a classification synchronization function is enabled, sending the first request to the first server; and the method further comprising:
receiving a first operation, and enabling or disabling the classification synchronization function.

13. The method according to any one of claims 9 to 12, wherein the sending a first request to a first server corresponding to the first mailbox account comprises:
sending a first sub-request to the first server corresponding to the first mailbox account, wherein the first sub-request is used by the first server to create the first target folder under the first mailbox account; and
sending a second sub-request to the first server after receiving a response message that is returned by the first server and that indicates that the first target folder is successfully created, wherein the second sub-request is used by the first server to classify the mails in the first mail set into the first target folder.

14. An electronic device, comprising a memory and a processor, wherein the memory is configured to store a computer program, and the processor is configured to perform the method according to any one of claims 1 to 13 when invoking the computer program.

15. A computer-readable storage medium, wherein the computer-readable storage medium stores a computer program, and when the computer program is executed by a processor, the method according to any one of claims 1 to 13 is implemented.

16. A computer program product, wherein when the computer program product runs on an electronic device, the electronic device is enabled to perform the method according to any one of claims 1 to 13.

17. A chip system, wherein the chip system comprises a processor, the processor is coupled to a memory, and the processor executes a computer program stored in the memory, to implement the method according to any one of claims 1 to 13.
